# EUROPEAN PATENT APPLICATION

(11) **EP 4 700 466 A1**
(43) Date of publication of application: **25.02.2026**
(21) Application number: 24791957.4
(22) Date of filing: 15.04.2024
(51) Int. Cl.: G02F 1/137, G02F 1/1334

(54) **SWITCHABLE GLASS, SWITCHABLE GLASS SYSTEM, AND CONTROL METHOD THEREFOR**

(30) Priority: 21.04.2023 CN 202310437525
(71) Applicant: Boe Technology Group Co., Ltd., Beijing 100015 (CN); Beijing BOE Technology Development Co., Ltd., Beijing 100176 (CN)
(72) Inventor: YU, Jing, Beijing 100176 (CN); ZHAO, Junjie, Beijing 100176 (CN); TANG, Yutao, Beijing 100176 (CN); JU, Xiaoqian, Beijing 100176 (CN); ZHU, Binghai, Beijing 100176 (CN)
(74) Representative: AWA Sweden AB
(86) International application number: PCT/CN2024/087720
(87) International publication number: WO 2024/217372

(57) **Abstract**

A switchable glass (10) is provided, including: a first base substrate (11) and a second base substrate (21) opposite to each other; a first electrode (12) on the first base substrate (11); a second electrode (22) on the second base substrate (21); and a switchable assembly (3) sandwiched between the first base substrate (11) and the second base substrate (21). The switchable assembly (3) is configured to change a state of the switchable assembly (3) in response to an electrical signal applied to the first electrode (12) and/or the second electrode (22), so that the switchable glass (10) is switched from a first state in which the switchable glass (10) has M regions to a second state in which the switchable glass (10) has N regions. M and N are positive integers greater than or equal to 1. The N regions are different from the M regions in terms of at least one attribute selected from a group consisting of a number of sub-regions, an occupancy range of at least one sub-region, a light transmittance, and a relative position.

## Description

### TECHNICAL FIELD

The present disclosure relates to a field of display technology, and in particular to a switchable glass, a switchable glass system, and a method of controlling a switchable glass system.

### BACKGROUND

At present, a switchable glass is increasingly used in fields of architecture, transportation and interior design. With the help of electrical control, temperature control, light control or voltage control, the switchable glass may be switched between a bright state and a dark state (or frosting state). For various types of switchable glass, how to improve a switching flexibility to meet diverse desires is a topic that R&D personnel continue to pay attention to.

### SUMMARY

In order to solve at least one aspect of the above problems, embodiments of the present disclosure provide a switchable glass, a switchable glass system, and a method of controlling a switchable glass system.

In an aspect of embodiments of the present disclosure, a switchable glass is provided, including: a first base substrate and a second base substrate opposite to each other; a first electrode on the first base substrate; a second electrode on the second base substrate; and a switchable assembly sandwiched between the first base substrate and the second base substrate, where the switchable assembly is configured to change a state of the switchable assembly in response to an electrical signal applied to at least one of the first electrode or the second electrode, so that the switchable glass is switched from a first state in which the switchable glass has M sub-regions to a second state in which the switchable glass has N sub-regions, where M is a positive integer greater than or equal to 1, N is a positive integer greater than or equal to 1, and the N sub-regions are different from the M sub-regions in terms of at least one attribute selected from a group consisting of: a number of sub-regions, an occupancy range of at least one sub-region, a light transmittance, and a relative position.

In some embodiments, at least one of M or N is greater than or equal to 2.

In some embodiments, the M sub-regions are arranged linearly in a first direction, or arranged linearly in a second direction intersecting with the first direction, or arranged in an array in the first direction and the second direction; and/or the N sub-regions are arranged linearly in a first direction, or arranged linearly in a second direction intersecting with the first direction, or arranged in an array in the first direction and the second direction.

In some embodiments, M is equal to N, and an arrangement direction of the M sub-regions is the same as an arrangement direction of the N sub-regions.

In some embodiments, a light transmittance of at least an i^{th} sub-region among the M sub-regions is different from a light transmittance of at least an i^{th} sub-region among the N sub-regions, and/or an occupancy range of at least an i^{th} sub-region among the M sub-regions is different from an occupancy range of at least an i^{th} sub-region among the N sub-regions, where i is a serial number sequenced in the arrangement direction of the M sub-regions or the arrangement direction of the N sub-regions, and i is a positive integer greater than or equal to 1 and less than or equal to M or N.

In some embodiments, M is equal to N, and an arrangement direction of the M sub-regions is different from an arrangement direction of the N sub-regions.

In some embodiments, M is not equal to N, and an arrangement direction of the M sub-regions is the same as an arrangement direction of the N sub-regions; or M is not equal to N, and an arrangement direction of the M sub-regions is different from an arrangement direction of the N sub-regions.

In some embodiments, the switchable assembly includes a dye liquid crystal layer.

In some embodiments, the first electrode includes K sub-electrodes, K is a positive integer greater than or equal to 1, and K is greater than or equal to a larger one of M and N.

In some embodiments, the switchable assembly is configured to change the state of the switchable assembly in response to electrical signals applied to the first electrode and the second electrode, so that the switchable glass is switched to a third state in which the switchable glass has at least one of a display function or a writing function.

In another aspect of embodiments of the present disclosure, a switchable glass system for a vehicle is provided, including: the switchable glass described above, where the switchable glass is installed on the vehicle; and a controller electrically connected to the first electrode and the second electrode of the switchable glass.

In some embodiments, the M sub-regions are arranged linearly in a length direction of the vehicle, or arranged linearly in a height direction of the vehicle, or arranged in an array in a length direction of the vehicle and a height direction of the vehicle; and/or the N sub-regions are arranged linearly in a length direction of the vehicle, or arranged linearly ina height direction of the vehicle, or arranged in an array in a length direction of the vehicle and a height direction of the vehicle.

In some embodiments, M=1, and N is greater than or equal to 2.

In some embodiments, the M sub-regions have a first light transmittance, the N sub-regions respectively have N light transmittances, at least one of the N light transmittances is the same as the first light transmittance, and at least another one of the N light transmittances is different from the first light transmittance.

In some embodiments, M=N, and M and N are positive integers greater than or equal to 2, and occupancy ranges of the N sub-regions are different from occupancy ranges of the M sub-regions, respectively.

In some embodiments, M=N, and the M sub-regions are arranged linearly in a length direction of the vehicle, the N sub-regions are arranged linearly in the length direction of the vehicle, a light transmittance of at least an i^{th} sub-region among the N sub-regions is different from a light transmittance of at least an i^{th} sub-region among the M sub-regions, where i is a serial number sequenced from front to back in the length direction of the vehicle, and i is a positive integer greater than or equal to 1 and less than or equal to M.

In some embodiments, the switchable glass includes a side windshield glass on a driver side of the vehicle, and a first sub-region among the N sub-regions has a greater light transmittance than any other sub-region among the N sub-regions.

In some embodiments, the light transmittance and/or the occupancy range of at least one sub-region among the N sub-regions are/is determined based on at least one of a user input information, an information outside the vehicle, an information inside the vehicle, or a travelling information of the vehicle.

In some embodiments, M=N, and the M sub-regions are arranged linearly in a height direction of the vehicle, the N sub-regions are arranged linearly in the height direction of the vehicle, and a light transmittance of at least a j^{th} sub-region among the N sub-regions is different from a light transmittance of at least a j^{th} sub-region among the M sub-regions, where j is a serial number sequenced from bottom to top in the height direction of the vehicle, and j is a positive integer greater than or equal to 1 and less than or equal to M.

In some embodiments, M=N, and the M sub-regions are arranged linearly in a length direction of the vehicle, and the N sub-regions are arranged linearly in a height direction of the vehicle.

In some embodiments, a light transmittance of a j^{th} sub-region among the N sub-regions is the same as a light transmittance of at least an i^{th} sub-region among the M sub-regions, where i=j, i is a serial number sequenced from front to back in the length direction of the vehicle, i is a positive integer greater than or equal to 1 and less than or equal to M, j is a serial number sequenced from bottom to top in the height direction of the vehicle, and j is a positive integer greater than or equal to 1 and less than or equal to N.

In some embodiments, M=N, and the M sub-regions are arranged linearly in a height direction of the vehicle, and the N sub-regions are arranged linearly in a length direction of the vehicle.

In some embodiments, a light transmittance of an i^{th} sub-region among the N sub-regions is the as a light transmittance of at least a j^{th} sub-region among the M sub-regions, where i=j, i is a serial number sequenced from front to back in the length direction of the vehicle, i is a positive integer greater than or equal to 1 and less than or equal to N, j is a serial number sequenced from bottom to top in the height direction of the vehicle, and j is a positive integer greater than or equal to 1 and less than or equal to M.

In some embodiments, the switchable glass includes at least one selected from a group consisting of: a rear windshield glass on a rear side of the vehicle, at least one side windshield glass on a side of the vehicle, and a sunroof glass on a top side of the vehicle.

In some embodiments, at least two switchable glasses include at least two selected from a group consisting of a rear windshield glass on a rear side of the vehicle, at least one side windshield glass on a side of the vehicle, and a sunroof glass on a top side of the vehicle, and the at least two switchable glasses are controllable separately.

In another aspect of the present disclosure, a method of controlling a switchable glass system is provided, where the switchable glass system includes: a switchable glass installed on a vehicle; and a controller, where the switchable glass includes: a first base substrate and a second base substrate opposite to each other; a first electrode on the first base substrate; a second electrode on the second base substrate; and a switchable assembly sandwiched between the first base substrate and the second base substrate, and the controller is electrically connected to the first electrode and the second electrode of the switchable glass, the method including: acquiring at least one information selected from a group consisting of a user input information, an information outside the vehicle, an information inside the vehicle, and a travelling information of the vehicle; generating an electrical signal corresponding to the at least one information based on the at least one information selected from the group consisting of the user input information, the information outside the vehicle, the information inside the vehicle, and the travelling information of the vehicle; and applying the electrical signal to at least one of the first electrode or the second electrode to change a state of the switchable assembly, so that the switchable glass is switched from a first state in which the switchable glass has M sub-regions to a second state in which the switchable glass has N sub-regions, where M is a positive integer greater than or equal to 1, N is a positive integer greater than or equal to 1, and the N sub-regions are different from the M sub-regions in terms of at least one attribute selected from a group consisting of: a number of sub-regions, an occupancy range of at least one sub-region, a light transmittance, and a relative position.

In some embodiments, the first electrode includes K sub-electrodes, K is a positive integer greater than or equal to 1, K is greater than or equal to a larger one of M and N, and the applying the electrical signal to at least one of the first electrode or the second electrode to change a state of the switchable assembly so that the switchable glass is switched from a first state to a second state includes: applying the electrical signal to the K sub-electrodes of the first electrode, where the K sub-electrodes are divided into N sets of sub-electrodes, and electrical signals applied to the N sets of sub-electrodes are different from each other; separately changing states of the switchable assembly in the N sub-regions respectively corresponding to the N sets of sub-electrodes , in response to the electrical signals applied to the N sets of sub-electrodes being different from each other; and switching the switchable glass to the second state in response to a change in the states of the switchable assembly in the N sub-regions.

In some embodiments, the K sub-electrodes are divided into two sets of sub-electrodes, and electrical signals applied to the two sets of sub-electrodes are different from each other.

In some embodiments, the user input information includes an information input by a user through at least one operation selected from a group consisting of operating a physical input component, operating an electronic input component, voice inputting, and gesture controlling; and/or wherein the travelling information of the vehicle includes at least one of a speed of the vehicle, a steering information of the vehicle, or a travelling direction of the vehicle.

### BRIEF DESCRIPTION OF THE DRAWINGS

With following descriptions of the present disclosure with reference to the accompanying drawings, other objectives and advantages of the present disclosure may be clear and the present disclosure may be understood comprehensively. In the accompanying drawings:
FIG. 1 shows a schematic plan view of a switchable glass according to some exemplary embodiments of the present disclosure;
FIG. 2A shows a cross-sectional view of the switchable glass in a transparent state taken along line AA' in FIG. 1 according to some exemplary embodiments of the present disclosure, and FIG. 2B shows a cross-sectional view of the switchable glass in a dark state taken along line AA' in FIG. 1 according to some exemplary embodiments of the present disclosure;
FIG. 3 and FIG. 4 respectively show a plan view of a first switchable substrate of the switchable glass shown in FIG. 1 and a plan view of a second switchable substrate of the switchable glass shown in FIG. 1 according to an embodiment of the present disclosure;
FIG. 5 shows a schematic plan view of a switchable glass according to other exemplary embodiments of the present disclosure;
FIG. 6A shows a cross-sectional view of the switchable glass in a transparent state taken along line BB' in FIG. 5 according to some exemplary embodiments of the present disclosure, and FIG. 6B shows a cross-sectional view of the switchable glass in a dark state taken along line BB' in FIG. 5 according to some exemplary embodiments of the present disclosure;
FIG. 7 shows a schematic plan view of a first switchable substrate of the switchable glass shown in FIG. 5 according to an embodiment of the present disclosure;
FIG. 8 shows a schematic plan view of a switchable glass according to other exemplary embodiments of the present disclosure;
FIG. 9A shows a cross-sectional view of the switchable glass in a transparent state taken along line CC' in FIG. 8 according to some exemplary embodiments of the present disclosure, and FIG. 9B shows a cross-sectional view of the switchable glass in a dark state taken along line CC' in FIG. 8 according to some exemplary embodiments of the present disclosure;
FIG. 10 shows a schematic plan view of a first switchable substrate of the switchable glass shown in FIG. 8 according to an embodiment of the present disclosure;
FIG. 11A to FIG. 11H show schematic diagrams of a switchable glass in various states according to some exemplary embodiments of the present disclosure;
FIG. 12 shows a curve of an variation of a light transmittance of a switchable glass with a driving voltage according to some embodiments of the present disclosure;
FIG. 13A to FIG. 13C show schematic structural diagrams of a switchable glass system for a vehicle according to different exemplary embodiments of the present disclosure;
FIG. 14A to FIG. 14F show schematic diagrams of dynamic switching of vertical sub-regions according to some exemplary embodiments of the present disclosure;
FIG. 15A to FIG. 15C show schematic diagrams of dynamic switching of horizontal sub-regions according to some exemplary embodiments of the present disclosure;
FIG. 16A to FIG. 16D show schematic diagrams of dynamic switching between a number of horizontal sub-regions and the same number of vertical sub-regions according to some exemplary embodiments of the present disclosure;
FIG. 17A to FIG. 17I show schematic diagrams of dynamic switching between a number of horizontal sub-regions and a different number of vertical sub-regions according to some exemplary embodiments of the present disclosure;
FIG. 18A to FIG. 18D show schematic diagrams of vehicles with different models according to some exemplary embodiments of the present disclosure;
FIG. 19 shows a schematic structural diagram of a switchable glass according to some exemplary embodiments of the present disclosure;
FIG. 20 shows a schematic structural diagram of a switchable glass system for a vehicle according to some further exemplary embodiments of the present disclosure;
FIG. 21 shows a schematic diagram of light shielding of a sunroof glass and a canopy glass according to some exemplary embodiments of the present disclosure;
FIG. 22 shows a schematic structural diagram of a switchable glass system for a vehicle according to some further exemplary embodiments of the present disclosure;
FIG. 23 shows a schematic diagram of light shielding of a sunroof glass and a canopy glass according to some further exemplary embodiments of the present disclosure;
FIG. 24 shows a flowchart of a method of controlling a switchable glass system according to some exemplary embodiments of the present disclosure;
FIG. 25 shows a flowchart of applying an electrical signal according to some exemplary embodiments of the present disclosure; and
FIG. 26 shows a flowchart of adjusting a seat by a driver according to some exemplary embodiments of the present disclosure.

It should be noted that for the sake of clarity, in the accompanying drawings used to describe embodiments of the present disclosure, sizes of layers, structures or regions may be enlarged or reduced, that is, these accompanying drawings are not drawn according to actual scale.

### DETAILED DESCRIPTION OF EMBODIMENTS

Technical solutions of the present disclosure will be further described in detail below through embodiments with reference to accompanying drawings. In the specification, the same or similar reference numerals represent the same or similar components. The following descriptions of embodiments of the present disclosure with reference to the accompanying drawings are intended to explain a general inventive concept of the present disclosure, and should not be understood as a limitation to the present disclosure.

In addition, in the following detailed descriptions, for the convenience of explanation, many specific details are set forth to provide comprehensive understanding of embodiments of the present disclosure. Obviously, however, one or more embodiments may also be implemented without these specific details.

It should be understood that, although the terms "first," "second" and so on may be used here to describe different elements, these elements should not be limited by these terms. These terms are merely used to distinguish one element from another element. For example, without departing from the scope of the exemplary embodiments, a first element may be named as a second element, and similarly, the second element may be named as the first element. The term "and/or" as used here includes any and all combinations of one or more related listed items.

It should be understood that when an element or layer is referred to as being "formed on" another element or layer, the element or layer may be formed directly or indirectly on the other element or layer. That is, for example, an intermediate element or an intermediate layer may be provided. In contrast, when an element or layer is referred to as being "directly formed on" another element or layer, no intermediate element or intermediate layer is provided. Other terms used to describe a relationship between elements or layers (for example, "between" and "directly between", "adjacent to" and "directly adjacent to", etc.) should be interpreted in a similar manner.

The terms used herein are merely for a purpose of describing specific embodiments, and are not intended to limit exemplary embodiments. As used herein, unless otherwise specified in the context, a singular form is also intended to include a plural form. It should also be understood that when terms "containing" and/or "including" are used herein, it means that the described features, wholes, steps, operations, elements and/or components are provided, but do not exclude the presence or addition of one or more other features, wholes, steps, operations, elements, components and/or combinations thereof.

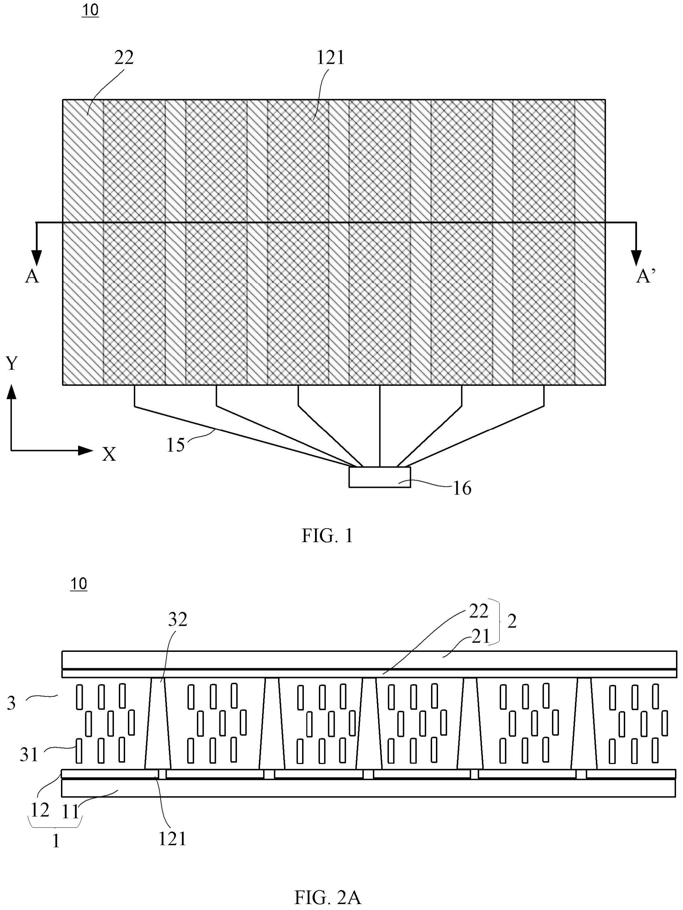

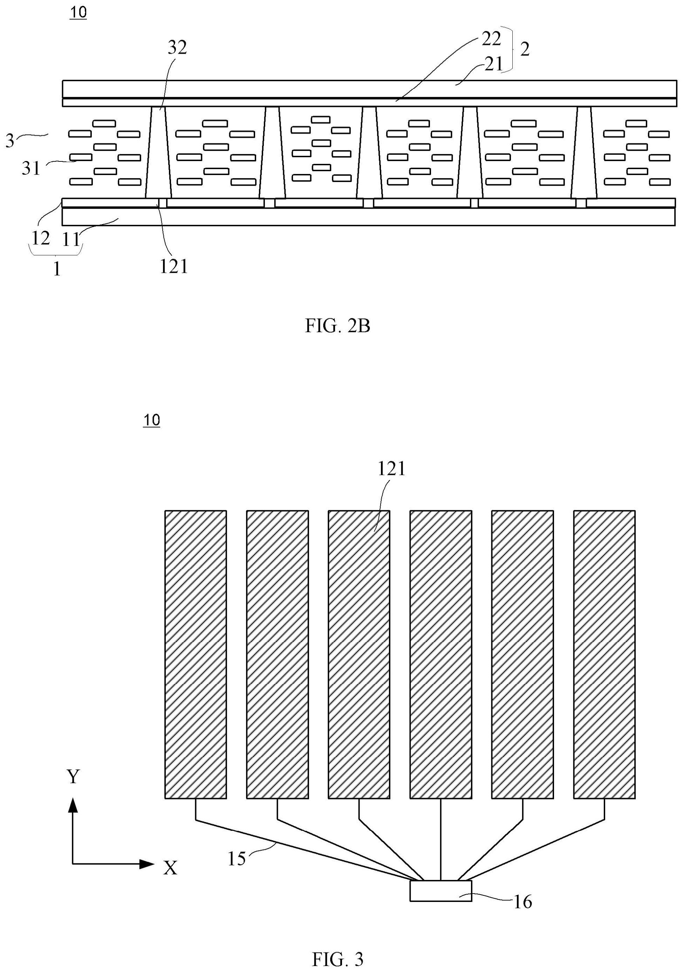

FIG. 1 shows a schematic plan view of a switchable glass 10 according to some exemplary embodiments of the present disclosure. FIG. 2A shows a cross-sectional view of the switchable glass 10 in a transparent state taken along line AA' in FIG. 1 according to some exemplary embodiments of the present disclosure. FIG. 2B shows a cross-sectional view of the switchable glass 10 in a dark state taken along line AA' in FIG. 1 according to some exemplary embodiments of the present disclosure.

Referring to FIG. 1, FIG. 2A and FIG. 2B, the switchable glass 10 includes: a first base substrate 11 and a second base substrate 21 opposite to each other; a first electrode 12 on the first base substrate 11; a second electrode 22 on the second base substrate 21; and a switchable assembly 3 sandwiched between the first base substrate 11 and the second base substrate 21.

For example, the first base substrate 11 and the second base substrate 21 may be transparent glass substrates respectively, so that the switchable glass 10 in a transparent state may have a good light transmittance. For example, the switchable glass 10 may be applied in fields such as architecture, transportation, and interior design to achieve switching between a transparent state and a non-transparent state (such as a dark state or a frosting state). For example, the switchable glass 10 may be of various types such as polymer dispersed liquid crystal (PDLC) switchable glass 10, electrochromic switchable glass 10, and dye liquid crystal switchable glass 10.

In an example, the first electrode 12 and the second electrode 22 may be transparent electrodes respectively, which may be made of, for example, a transparent conductive material such as indium tin oxide (ITO) or indium zinc oxide (IZO).

In some embodiments of the present disclosure, the switchable assembly 3 may include a liquid crystal layer 31, such as a dye liquid crystal layer. Specifically, the dye liquid crystal layer may include liquid crystal molecules and color dye molecules mixed with the liquid crystal molecules. For example, the color dye molecules may be dichroic dye molecules.

In the switchable glass 10 provided in embodiments of the present disclosure, referring to FIG. 2A and FIG. 2B, when no driving voltage is applied to the first electrode 12 and the second electrode 22, no electric field is generated between the first electrode 12 and the second electrode 22, and the liquid crystal molecules and the color dye molecules in the switchable assembly 3 are vertically oriented and do not absorb light, so that the switchable glass 10 presents a light-transmitting state (i.e., transparent state). When a predetermined driving voltage is applied to the first electrode 12 and the second electrode 22, an electric field is generated between the first electrode 12 and the second electrode 22, and the liquid crystal molecules and the color dye molecules in the liquid crystal layer 31 are deflected, then the liquid crystal molecules are arranged horizontally under the action of the electric field, and the color dye molecules are induced to be arranged horizontally to absorb light, so that the switchable glass 10 presents an opaque state (i.e., dark state). In a deflection process of the liquid crystal molecules, the color dye molecules may rotate in the same orientation as the liquid crystal molecules under the action of forces between the liquid crystal molecules. Different rotation angles of the color dye molecules result in different absorption rates of light and different effects of blocking light, which leads to different light transmittances of the switchable glass 10.

Accordingly, by controlling the driving voltage applied to both sides of the liquid crystal layer 31, it is possible to control a deflection state of the liquid crystal molecules in the liquid crystal layer 31, thereby controlling the light transmittance of the switchable glass 10 (that is, gradually switching between the transparent state and the dark state). The switchable glass 10 includes a normally white mode and a normally black mode. The normally white mode refers to that the switchable glass 10 is in a transparent state (i.e., the light transmittance is 100% or approximately 100%), and the normally black mode refers to that the switchable glass 10 is in a dark state (i.e.,the light transmittance is 0 or in a low range).

In the above-mentioned embodiments, the switchable glass 10 provided by embodiments of the present disclosure is described by taking dye liquid crystal as an example. It should be understood that the switchable glass 10 provided by embodiments of the present disclosure may further include other types of liquid crystals, including but not limited to polymer dispersed liquid crystal (PDLC).

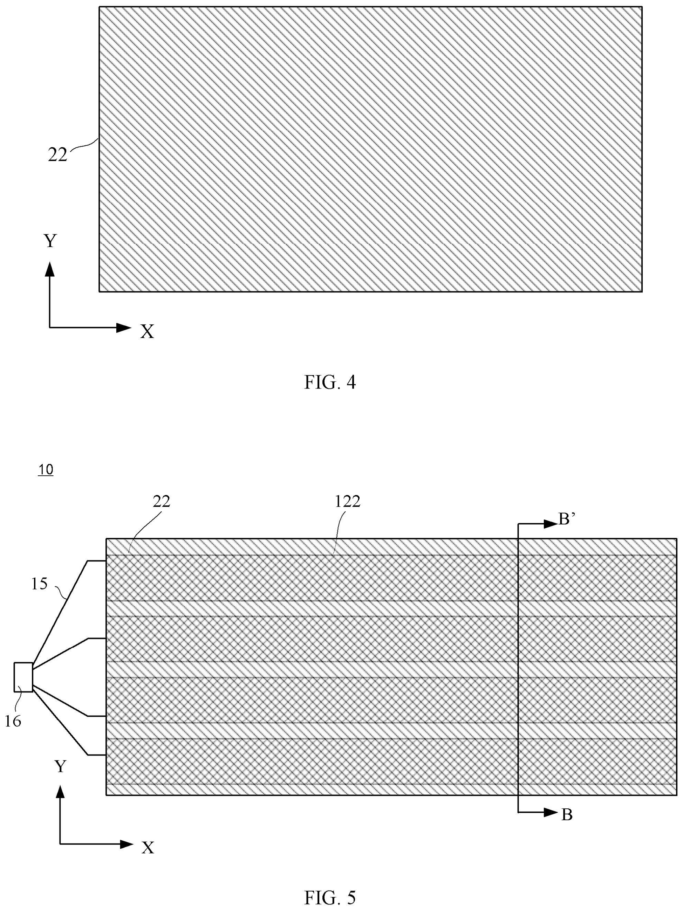

FIG. 3 and FIG. 4 respectively show schematic plan views of the first switchable substrate 1 and the second switchable substrate 2 of the switchable glass 10 shown in FIG. 1 according to an embodiment of the present disclosure. The first switchable substrate 1 includes a first base substrate 11 and a first electrode 12, and the second switchable substrate 2 includes a second base substrate 21 and a second electrode 22.

Referring to FIG. 1 to FIG. 4, the first electrode 12 of the first switchable substrate 1 includes a plurality of first sub-electrodes 121. The plurality of first sub-electrodes 121 are arranged on the first base substrate 11 at intervals. That is, an orthographic projection of the first electrode 12 on the first base substrate 11 is in a shape of a plurality of strips arranged at intervals. It should be understood that each first sub-electrode 121 is transparent. For example, each first sub-electrode 121 is made of a transparent conductive material such as ITO.

Referring to FIG. 1 and FIG. 3, the switchable glass 10 may further include a plurality of wires on the first base substrate 11. In an example, the plurality of wires may correspond to the plurality of first sub-electrodes 121 one by one. For example, each wire may be a conductive wire made of a conductive material.

Referring to FIG. 1 and FIG. 3, the switchable glass 10 may further include a driving circuit 16 such as IC, the driving circuit 16 is used to provide an electrical signal. Specifically, the plurality of wires may electrically connect respective first sub-electrodes 121 to the driving circuit 16 such as IC, so that the control signals provided by the driving circuit 16 may be provided to the plurality of first sub-electrodes 121, respectively.

The second electrode 22 of the second switchable substrate 2 may be a planar electrode, that is, an orthographic projection of the second electrode 22 on the second base substrate 21 has a continuously distributed planar shape. For example, in the embodiments of FIG. 4, the orthographic projection of the second electrode 22 on the second base substrate 21 is in a shape of a complete rectangle.

In an example, as shown in FIG. 1, the orthographic projection of the first electrode 12 on the first base substrate 11 falls within the orthographic projection of the second electrode 22 on the first base substrate 11.

It should be understood that the second electrode 22 may also be electrically connected to the driving circuit 16 such as IC through a conductive structure (such as wire), so that the control signal provided by the driving circuit 16 may be provided to the second electrode 22.

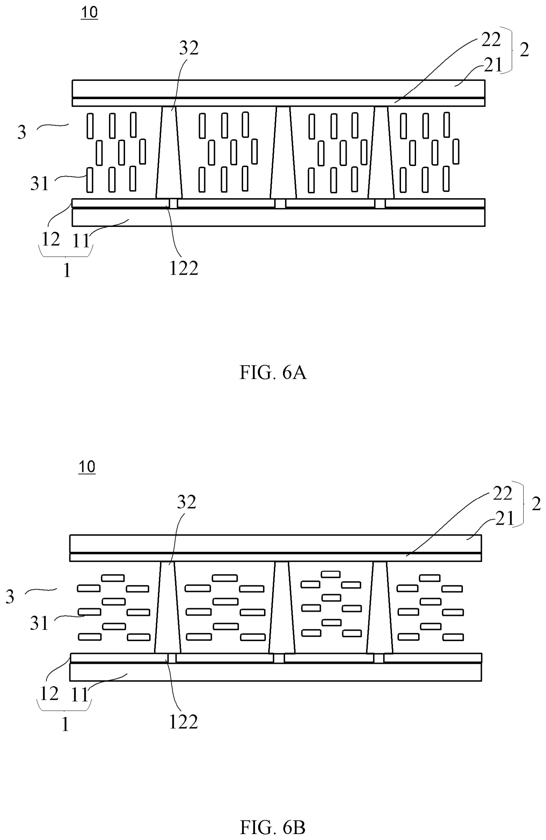

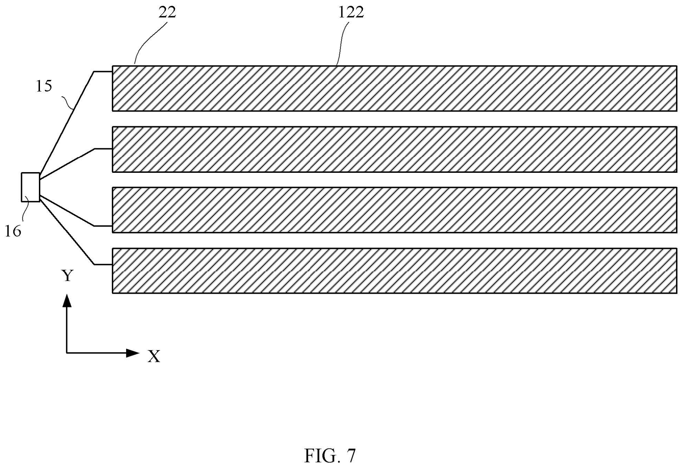

FIG. 5 shows a schematic plan view of a switchable glass 10 according to other exemplary embodiments of the present disclosure. FIG. 6A shows a cross-sectional view of the switchable glass 10 in a transparent state taken along line BB' in FIG. 5 according to some exemplary embodiments of the present disclosure, and FIG. 6B shows a cross-sectional view of the switchable glass 10 in a dark state taken along line BB' in FIG. 5 according to some exemplary embodiments of the present disclosure. FIG. 7 shows a schematic plan view of a first switchable substrate 1 of the switchable glass 10 shown in FIG. 5 according to an embodiment of the present disclosure. The schematic plan view of the second switchable substrate may refer to FIG. 4

Referring to FIG. 5 to FIG. 7, the switchable glass 10 in such embodiments includes a first base substrate 11, a second base substrate 21, a first electrode 12, a second electrode 22 and a switchable assembly 3. It should be noted that some structures of the embodiments shown in FIG. 5 to FIG. 7 may refer to the above description with reference to FIG. 1 to FIG. 4, and the same or similar components or structures are denoted by the same reference numerals.

As shown in FIG. 3, the length direction of the first sub-electrode 121 extends in Y-axis direction, and as shown in FIG. 7, the length direction of the second sub-electrode 122 extends in X-axis direction. Therefore, the region corresponding to each first sub-electrode 121 and the region corresponding to each second sub-electrode 122 respectively achieve switching effects in different directions.

Referring to FIG. 5 to FIG. 7, the first electrode 12 of the first switchable substrate 1 includes a plurality of second sub-electrodes 122. The plurality of second sub-electrodes 122 are arranged on the first base substrate 11 at intervals. It should be understood that each second sub-electrode 122 is transparent. For example, each second sub-electrode 122 is made of a transparent conductive material such as ITO.

In some embodiments of the present disclosure, the first sub-electrode 121 and the second sub-electrode 122 may be used in combination. For example, the first electrode 12 may include some first sub-electrodes 121 and some second sub-electrodes 122, where the respective lengths of the first sub-electrode 121 and the second sub-electrode 122 may be adaptively adjusted.

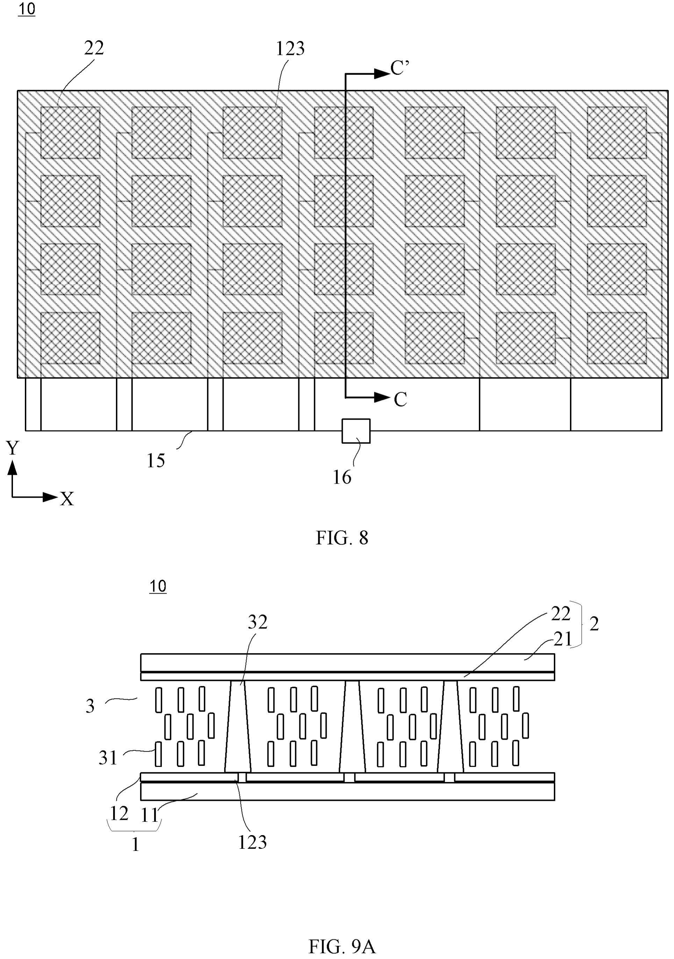

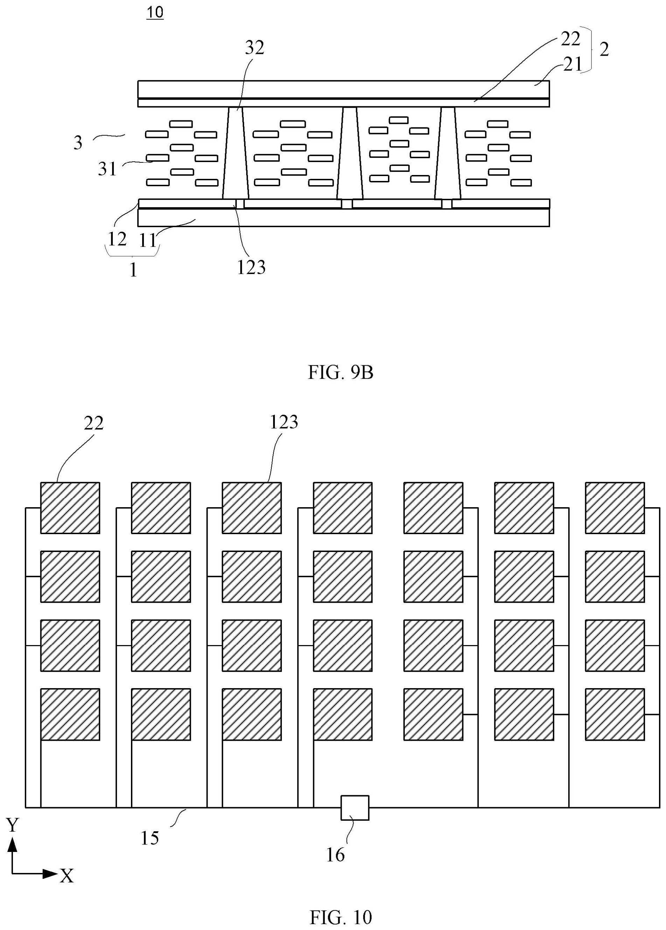

FIG. 8 shows a schematic plan view of a switchable glass 10 according to other exemplary embodiments of the present disclosure. FIG. 9A shows a cross-sectional view of the switchable glass 10 in a transparent state taken along line CC' in FIG. 8 according to some exemplary embodiments of the present disclosure, and FIG. 9B shows a cross-sectional view of the switchable glass 10 in a dark state taken along line CC' in FIG. 8 according to some exemplary embodiments of the present disclosure. FIG. 10 shows a schematic plan view of a first switchable substrate 1 of the switchable glass 10 shown in FIG. 8 according to an embodiment of the present disclosure. A schematic plan view of a second switchable substrate.

Referring to FIG. 8 to FIG. 10, the switchable glass 10 in such embodiments includes a first base substrate 11, a second base substrate 21, a first electrode 12, a second electrode 22 and a switchable assembly 3. It should be noted that some structures of the embodiments shown in FIG. 8 to FIG. 10 may also refer to the above description with reference to FIG. 1 to FIG. 4, and the same or similar components or structures are denoted by the same reference numerals.

Referring to FIG. 10, the first electrode 12 includes a plurality of third sub-electrodes 123 sequentially arranged in the X-axis direction and the Y-axis direction to form an array. Referring to FIG. 8 to FIG. 10, the plurality of third sub-electrodes 123 are arranged in an array on the first base substrate 11. It should be understood that each third sub-electrode 123 is a transparent second sub-electrode 122. For example, each third sub-electrode 123 is made of a transparent conductive material such as ITO.

In an example, the plurality of wires may correspond to the plurality of third sub-electrodes 123 one by one and electrically connect respective third sub-electrodes 123 to the driving circuit 16 such as IC, so that the control signals provided by the driving circuit 16 may be provided to the plurality of third sub-electrodes 123 respectively. As the third sub-electrodes 123 are arranged in an array, the switching region may be more elaborate and has high flexibility.

In some embodiments of the present disclosure, at least two of the first sub-electrode 121, the second sub-electrode 122 and the third sub-electrode 123 may be used in combination. For example, the first electrode 12 may include some first sub-electrodes 121, some second sub-electrodes 122 and some third sub-electrodes 123, where the respective lengths of the first sub-electrode 121, the second sub-electrode 122 and the third sub-electrode 123 may be adaptively adjusted.

It may be understood that the first sub-electrode 121, the second sub-electrode 122 and the third sub-electrode 123 are shown as rectangles in FIG. 1 to FIG. 10. However, the present disclosure is not limited to this. For example, at least one of the first sub-electrode 121, the second sub-electrode 122 or the third sub-electrode 123 may have other shapes, such as a circle, an ellipse, a polygon or other irregular shapes, and each sub-electrode may be the same as or different from at least one other sub-electrode in terms of shape and size. Furthermore, the number of at least one of the first sub-electrode 121, the second sub-electrode 122 or the third sub-electrode 123 is not limited in the present disclosure. The shape of the second electrode 22 is not limited to a rectangle, and may also have other shapes, such as a circle, an ellipse, a polygon or other irregular shapes.

Referring to FIG. 2A to FIG. 2B, FIG. 6A to FIG. 6B and FIG. 9A to FIG. 9B, the switchable glass 10 may further include a spacer 32 to provide support. Optionally, the spacer 32 may be a spherical spacer 32, a columnar spacer 32, or a spacer 32 of other shapes. The spacer 32 may be made of a transparent material or a non-transparent material.

Referring to FIG. 2A to FIG. 2B, FIG. 6A to FIG. 6B and FIG. 9A to FIG. 9B, only a single first base substrate 11, a single second base substrate 21, a single first electrode 12, a single second electrode 22, and a single switchable assembly 3 are shown, which is referred to as a single cell structure herein. In some embodiments of the present disclosure, at least two single cell structures may be stacked to form a dual cell structure or a multiple cell structure. In the multiple cell structure, the long axes of the liquid crystal molecules in the dye liquid crystal layers 31 of at least two cell structures are perpendicular or substantially perpendicular to each other.

In some embodiments of the present disclosure, the switchable assembly 3 is configured to change a state of the switchable assembly 3 in response to an electrical signal applied to at least one of the first electrode 12 or the second electrode 22, so that the switchable glass 10 is switched from a first state to a second state. In the first state, the switchable glass 10 has M sub-regions, and M is a positive integer greater than or equal to 1. In the second state, the switchable glass 10 has N sub-regions, and N is a positive integer greater than or equal to 1. The N sub-regions are different from the M sub-regions in terms of at least one attribute selected from a group consisting of: a number of sub-regions, an occupancy range of at least one sub-region, a light transmittance, and a relative position.

In an example, the electrical signal may be a voltage signal. The voltage signal includes a predetermined driving voltage applied. In an operation of the switchable glass 10, an electrical signal may be transmitted to the first electrode 12 and/or the second electrode 22 to control a deflection state of the liquid crystal molecules in the liquid crystal layer 31, thereby controlling the light transmittance of the switchable glass 10.

Referring to FIG. 1 to FIG. 10, an electrical signal may be provided to at least one of the first electrode 12 or the second electrode 22 by the driving circuit 16 through a wire. For the sub-electrodes in the first electrode 12, the electrical signal transmitted by a wire may be the same as or different from the electrical signal transmitted by at least one other wire. In the switchable glass 10 provided in embodiments of the present disclosure, the driving circuit 16 may provide the electrical signal to at least one of the plurality of sub-electrodes (such as the first sub-electrode 121, the second sub-electrode 122 or the third sub-electrode 123, hereinafter referred to as the same), and provide the electrical signal to the second electrode 22, so that an electric field is generated between at least one sub-electrode and the second electrode 22, thereby changing the light transmittance of the region corresponding to the at least one sub-electrode.

In this way, it is possible to achieve various switching effects. For example, the light transmittance may be adjusted separately for each sub-electrode region. Accordingly, when it is required to specifically adjust the light transmittance of a particular region of the switchable glass 10, an electrical signal may be applied to the sub-electrode in that region and the second electrode 22 so that, for example, the driving voltage of the sub-electrode in that region is different from that of other sub-electrodes, and a corresponding electric field is generated in a region corresponding to that sub-electrode and the second electrode 22, thereby achieving a separate control of the light transmittance of that region.

It should be noted that, in the first state or the second state, each sub-region and each sub-electrode region may be the same or different. In other words, an orthographic projection of each sub-region may cover an orthographic projection of at least one sub-electrode region. In some embodiments, the first electrode 12 includes K sub-electrodes, where K is a positive integer greater than or equal to 1, and K is greater than or equal to a larger one of M and N. Therefore, the number of sub-regions in the first state or the second state is less than or equal to K.

Referring to FIG. 2A to FIG. 2B, FIG. 6A to FIG. 6B and FIG. 9A to FIG. 9B, the change in the state of the switchable assembly 3 may refer to that the liquid crystal molecules and the color dye molecules in the liquid crystal layer 31 deflect, and the liquid crystal molecules are arranged horizontally under the action of the electric field, inducing the color dye molecules to be arranged horizontally to absorb light, so that any sub-region of the switchable glass 10 has the same light transmittance or different light transmittance with at least one other sub-region.

In some embodiments, in the liquid crystal layer 31 corresponding to the plurality of sub-electrodes, at least two sub-electrodes are different in terms of the color of the color dye molecules in the dye liquid crystal layer 31. For example, one sub-electrode may correspond to green color dye molecules, and any other sub-electrode may correspond to purple color dye molecules, so that a switching function with diverse colors may be provided.

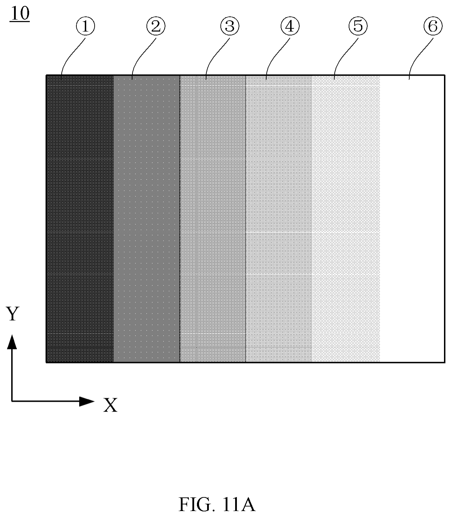

FIG. 11A to FIG. 11H show schematic diagrams of a switchable glass 10 in various states according to some exemplary embodiments of the present disclosure.

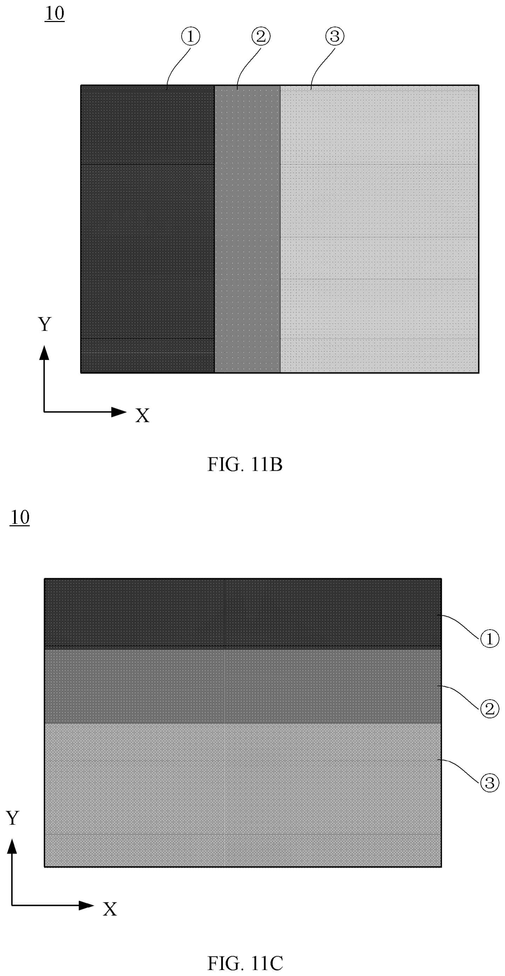

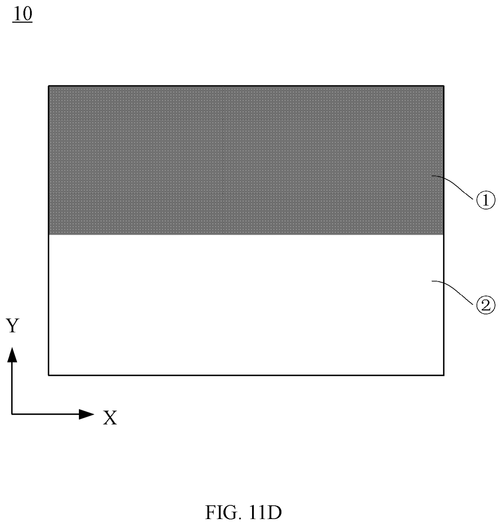

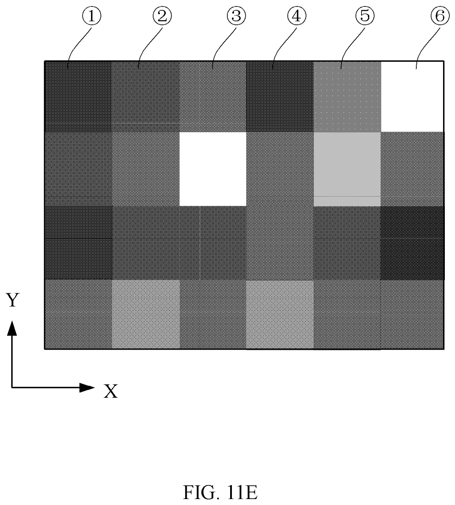

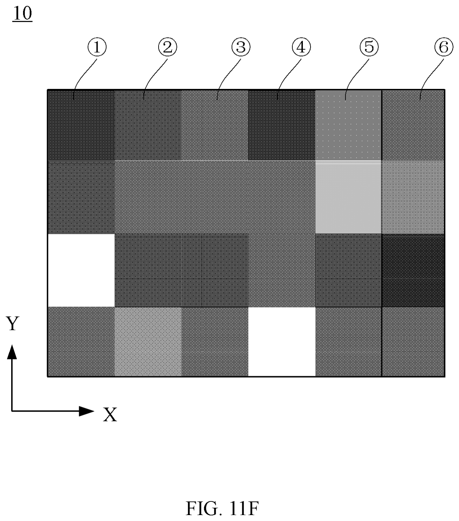

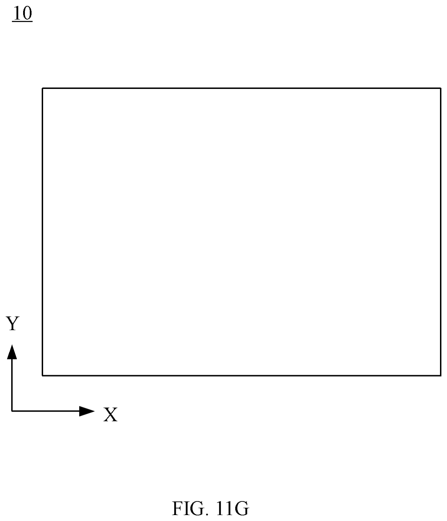

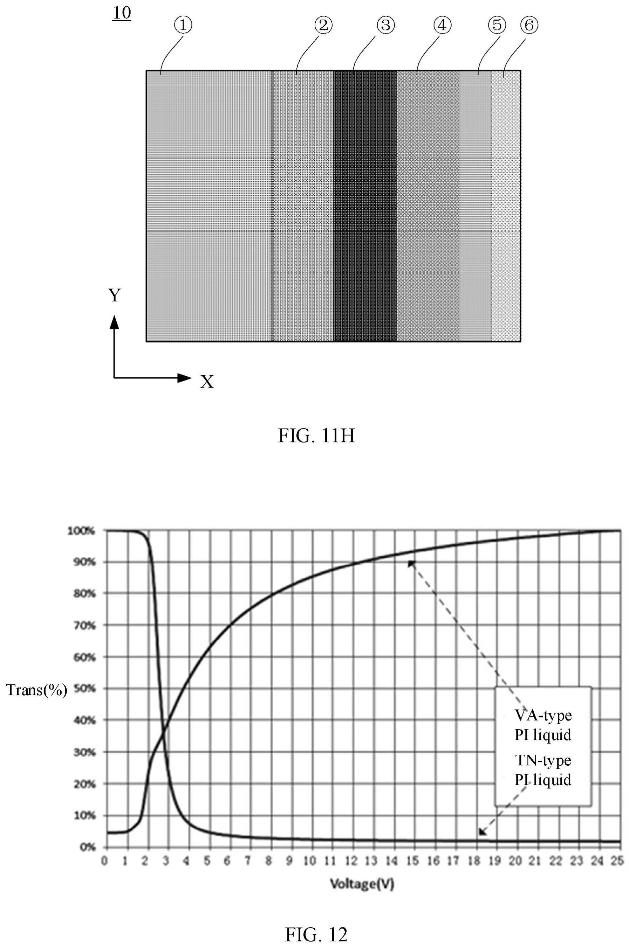

It should be noted that any state shown in FIG. 11A to FIG. 11H may be the first state, and any other state shown except for the first state may be the second state. Furthermore, the present disclosure is not intended to limit all states of the switchable glass 10 to those shown in FIG. 11Ato FIG. 11H. In other words, in addition to those shown in FIG. 11A to FIG. 11 H, the switchable glass 10 may have one or more other states.

As shown in FIG. 11A, the switchable glass 10 has six sub-regions in a state, such as sub-regions ① to ⑥, with the length direction of each sub-region being parallel to the Y axis. In this case, M or N is equal to 6.

As shown in FIG. 11B, the switchable glass 10 has three sub-regions in a state, such as sub-regions ① to ③, with the length direction of each sub-region being parallel to the Y axis. In this case, M or N is equal to 3.

As shown in FIG. 11C, the switchable glass 10 has three sub-regions in a state, such as sub-regions ① to ③, with the length direction of each sub-region being parallel to the X axis. In this case, M or N is equal to 3.

As shown in FIG. 11D, the switchable glass 10 has two sub-regions in a state, such as sub-regions ① to ②, with the length direction of each sub-region being parallel to the X axis. In this case, M or N is equal to 2.

As shown in FIG. 11E, the switchable glass 10 has 24 sub-regions in a state, and the sub-regions are distributed in an array along the X-axis and the Y-axis. In this case, M or N is equal to 24.

As shown in FIG. 11F, the switchable glass 10 has 24 sub-regions in a state, and the sub-regions are distributed in an array along the X-axis and the Y-axis. In this case, M or N is equal to 24. It should be noted that the serial numbers of sub-regions in FIG. 11E and FIG. 11F may be determined in the order from left to right in each row and from top row to bottom row. For example, as shown in FIG. 11E and FIG. 11F, a first row of sub-regions are numbered from left to right as sub-regions ① to ⑥, and then a second row of sub-regions are numbered from left to right.

As shown in FIG. 11G, the switchable glass 10 has one sub-region in a state. In this case, M or N is equal to 1.

As shown in FIG. 11H, the switchable glass 10 has six sub-regions in a state, such as sub-regions ① to ⑥, with the length direction of each sub-region being parallel to the Y axis. In this case, M or N is equal to 6.

In an example, in a case that the length direction of the first sub-electrode 121 extends in the Y-axis direction as shown in FIG. 1 to FIG. 4, the partitioning effect in FIG. 11G, FIG. 11A and FIG. 11B may be achieved, that is, the length direction of each sub-region is parallel to the Y-axis. In a case that the length direction of the second sub-electrode 122 extends in the X-axis direction as shown in FIG. 5 to FIG. 7, the partitioning effects in FIG. 11G, FIG. 11C and FIG. 11D may be achieved, that is, the length direction of each sub-region is parallel to the X-axis. In a case that a plurality of third sub-electrodes 123 are sequentially arranged in the X-axis direction and the Y-axis direction to form an array as shown in FIG. 8 to FIG. 10, any partitioning effect in FIG. 11A to 11H may be achieved.

In an example, for any sub-region, the occupancy range refers to an area of the sub-region on the switchable glass 10. Referring to FIG. 11A, the occupancy range of sub-region ① refers to an area of a rectangle corresponding to sub-region ① on the switchable glass 10. In an example, if FIG. 11A shows the switchable glass 10 in the first state and FIG. 11B shows the switchable glass 10 in the second state, the occupancy range of sub-region ① of the M sub-regions is different from the occupancy range of sub-region ① or sub-region ③ of the N sub-regions.

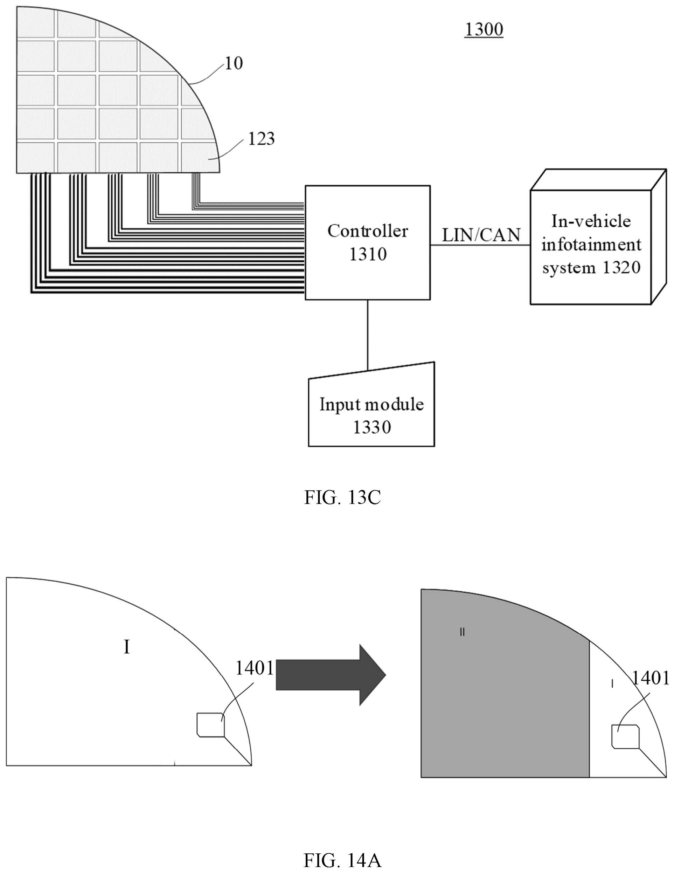

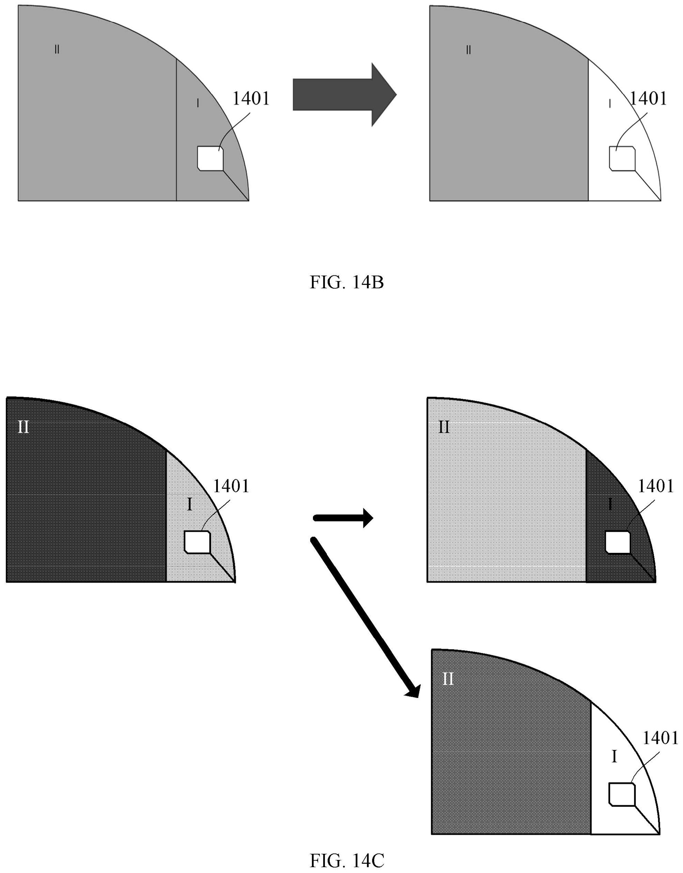

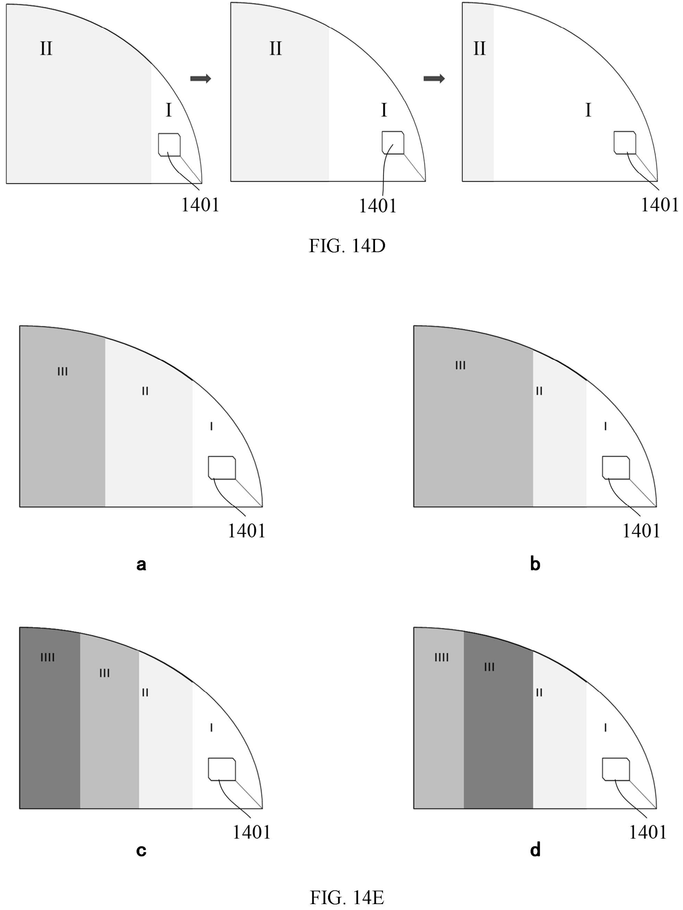

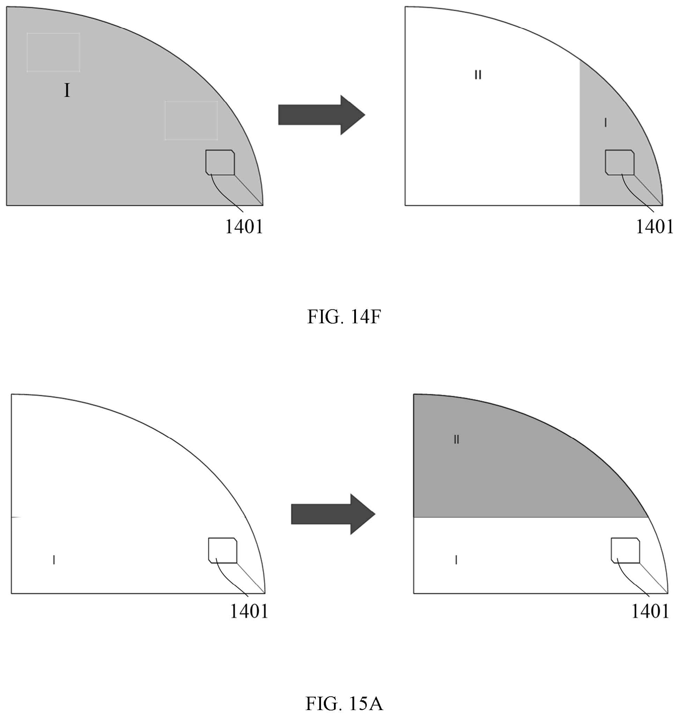

In an example, the relative position refers to a position attribute such as a distance and a direction of any sub-region relative to a reference position. The reference position may include a position of any other sub-region, or a position of any region on the switchable glass (such as a rearview mirror region shown in FIG. 14), or a position outside the switchable glass (such as a position of an object on the vehicle when the switchable glass is used on a vehicle). For example, the relative position may be a distance and a direction between reference points or reference lines of two sub-regions. Referring to FIG. 11A, with a center point of sub-region ① as a reference point of sub-region ① and a center point of sub-region ② as a reference point of sub-region ②, a first relative position of the two sub-regions may be determined. Referring to FIG. 11B, with a center point of sub-region ① as a reference point of sub-region ① and a center point of sub-region ② as a reference point of sub-region ②, a second relative position of the two sub-regions may be determined. In an example, if FIG. 11A shows the switchable glass 10 in the first state and FIG. 11B shows the switchable glass 10 in the second state, the first relative position for the M sub-regions is different from the second relative position for the N sub-regions.

In some embodiments, referring to FIG. 11A to FIG. 11H, if one figure thereof shows the switchable glass 10 in the first state and the other figures show the switchable glass 10 in the second state, the number of N sub-regions may be different from the number of M sub-regions.

In some embodiments, the difference in light transmittance between the N sub-regions and the M sub-regions at least includes: at least one sub-region in the N sub-regions has a different light transmittance from at least one sub-region with the same serial number in the M sub-regions (such as sub-region ① in FIG. 11C and sub-region ① in FIG. 11D). For example, the N sub-regions have at least one different light transmittance value, different order of light transmittance distribution, or completely different light transmittance values, etc. from the M sub-regions.

According to embodiments of the present disclosure, the state of the switchable assembly 3 is changed so that the switchable glass 10 is switched from the first state to the second state, thereby achieving dynamic switching of the sub-regions of the switchable glass 10, such as a function of changing at least one attribute, which may improve the switching flexibility to meet diverse desires.

In some embodiments, when the switchable glass 10 is switched from the first state to the second state, at least one of M or N is greater than or equal to 2.

For example, if M is greater than or equal to 2 and N is less than 2, then any state shown in the figures other than that shown in FIG. 11G may be the first state of the switchable glass 10, and FIG. 11G shows the switchable glass 10 in the second state, that is, the switchable glass 10 may achieve a dynamic switching function of uni-directionally reducing the number of sub-regions.

For example, if M is less than 2, and N is greater than or equal to 2, then FIG. 11G shows the switchable glass 10 in the first state, and any state shown in the figures other than that shown in FIG. 11G may be the second state of the switchable glass 10, that is, the switchable glass 10 may achieve a dynamic switching function of uni-directionally increasing the number of sub-regions.

For example, if both M and N are greater than or equal to 2, then any state shown in the figures other than that shown in FIG. 11G may be the first state of the switchable glass 10, and any state other than the first state shown in FIG. 11A to FIG. 11F may be the second state of the switchable glass 10, that is, the switchable glass 10 may achieve a dynamic switching function of arbitrarily increasing or reducing the number of sub-regions.

According to embodiments of the present disclosure, when the switchable glass 10 is switched from the first state to the second state, it is possible to achieve the dynamic switching functions of uni-directionally increasing the number of sub-regions, uni-directionally decreasing the number of sub-regions or bi-directionally changing the number of sub-regions.

In some embodiments, the M sub-regions are arranged linearly in a first direction, or arranged linearly in a second direction, or arranged in an array in the first direction and the second direction, where the first direction intersects with the second direction, and/or the N sub-regions are arranged linearly in the first direction, or arranged linearly in the second direction, or arranged in an array in the first direction and the second direction, where the first direction intersects with the second direction.

In an example, in a case that FIG. 11A or FIG. 11B shows the switchable glass 10 in the first state, the M sub-regions are arranged linearly in the first direction (such as the X-axis direction, hereinafter referred to as the same). In a case that FIG. 11B or FIG. 11A shows the switchable glass 10 in the second state, the N sub-regions are also arranged linearly in the first direction. In a case that FIG. 11C or FIG. 11D shows the switchable glass 10 in the second state, the N sub-regions are arranged linearly in the second direction (e.g., the Y-axis direction, hereinafter referred to as the same). In a case that FIG. 11E or FIG. 11F shows the switchable glass 10 in the second state, the N sub-regions are arranged in an array in the first direction and the second direction.

In an example, in a case that FIG. 11C or FIG. 11D shows the switchable glass 10 in the first state, the M sub-regions are arranged linearly in the second direction. In a case that FIG. 11D or FIG. 11C shows the switchable glass 10 in the second state, the N sub-regions are also arranged linearly in the second direction. In a case that FIG. 11A or FIG. 11B shows the switchable glass 10 in the second state, the N sub-regions are arranged linearly in the first direction. In a case that FIG. 11E or FIG. 11F shows the switchable glass 10 in the second state, the N sub-regions are arranged in an array in the first direction and the second direction.

In an example, in a case that FIG. 11E or FIG. 11F shows the switchable glass 10 in the first state, the M sub-regions are arranged in an array in the first direction and the second direction. In a case that FIG. 11B or FIG. 11A shows the switchable glass 10 in the second state, the N sub-regions are also arranged linearly in the first direction. In a case that FIG. 11C or FIG. 11D shows the switchable glass 10 in the second state, the N sub-regions are arranged linearly in the second direction. In a case that FIG. 11F or FIG. 11E shows the switchable glass 10 in the second state, the N sub-regions are arranged in an array in the first direction and the second direction.

The switchable glass 10 provided according to embodiments of the present disclosure may have a variety of sub-region arrangements and meet various state switching requirements.

In some embodiments, the switchable glass 10 is switched from the first state to the second state, M is equal to N, and an arrangement direction of the M sub-regions is the same as that of the N sub-regions. In an example, referring to FIG. 11A and FIG. 11H, in a case that FIG. 11A shows the switchable glass 10 in the first state and FIG. 11H shows the switchable glass 10 in the second state, each of the switchable glass 10 in the first state and the switchable glass 10 in the second state has six sub-regions, and the arrangement direction of the six sub-regions in the first state is the same as that of the six sub-regions in the second state.

In some embodiments, at least an i^{th} sub-region among the M sub-regions has a different light transmittance from at least an i^{th} sub-region among the N sub-regions, and/or at least an i^{th} sub-region among the M sub-regions has a different occupancy range from at least an i^{th} sub-region among the N sub-regions, where i is a serial number sequenced in the arrangement direction of the M sub-regions or the N sub-regions, and i is a positive integer greater than or equal to 1 and less than or equal to M or N.

In an example, referring to FIG. 11A and FIG. 11H, in a case that FIG. 11A shows the switchable glass 10 in the first state and FIG. 11H shows the switchable glass 10 in the second state, the arrangement direction is the X-axis direction. If i=1, that is, taking sub-region ① as an example, the light transmittance and the occupancy range of sub-region ① in the first state are less than those of sub-region ① in the second state. If i=3, that is, taking sub-region ③ as an example, the light transmittance of sub-region ① in the first state is greater than that of sub-region ① in the second state, and sub-region ① in the first state and sub-region ① in the second state have the same occupancy range.

In some embodiments, the switchable glass 10 is switched from the first state to the second state, M is equal to N, and the arrangement direction of the M sub-regions is different from that of the N sub-regions. In an example, referring to FIG. 11B and FIG. 11C, in a case that FIG. 11B shows the switchable glass 10 in the first state and FIG. 11C shows the switchable glass 10 in the second state, each of the switchable glass 10 in the first state and the switchable glass 10 in the second state has three sub-regions, the three sub-regions in the first state are arranged along the X-axis, and the three sub-regions in the second state are arranged along the Y-axis.

In some embodiments, the switchable glass 10 is switched from the first state to the second state, M is not equal to N, and the arrangement direction of the M sub-regions is the same as that of the N sub-regions. In an example, referring to FIG. 11C and FIG. 11D, in a case that FIG. 11C shows the switchable glass 10 in the first state and FIG. 11D shows the switchable glass 10 in the second state, the switchable glass 10 in the first state has three sub-regions, the switchable glass 10 in the second state has two sub-regions, three sub-regions in the first state and the two sub-regions in the second state are both arranged along the Y-axis.

In some embodiments, the switchable glass 10 is switched from the first state to the second state, M is not equal to N, and the arrangement direction of the M sub-regions is the same as that of the N sub-regions. In an example, referring to FIG. 11B and FIG. 11D, in a case that FIG. 11B shows the switchable glass 10 in the first state and FIG. 11D shows the switchable glass 10 in the second state, the switchable glass 10 in the first state has three sub-regions arranged along the X-axis, and the switchable glass 10 in the second state has two sub-regions arranged along the Y-axis.

In some embodiments, the switchable assembly 3 is configured to: change the state of the switchable assembly 3 in response to an electrical signal applied to the first electrode 12 and the second electrode 22, so that the switchable glass 10 is switched to a third state in which the switchable glass 10 has at least one of a display function or a writing function.

In an example, the display function includes functions of displaying static images (such as wallpapers, portraits or landscapes, etc.), displaying dynamic images (such as videos), and/or displaying web pages based on user browsing operations. The writing function includes displaying a trajectory in a writing process and a finished product after the writing stops, such as characters and images, in response to user's writing operations.

In some embodiments, the electrical signal in such embodiments may include a control signal. The switchable glass 10 may further include a display screen, and the control signal may be output to the first electrode 12, the second electrode 22 and the display screen. The display screen is provided on a side of the switchable glass 10, for example, on a side of the first base substrate 11 or the second base substrate 21. The display screen may be a transparent screen with a touch function. When the switchable glass 10 is switched to the third state, the switchable assembly 3 may switch to a full black or full white mode from any sub-region switching state, thereby turning on the display function. When the display screen displays a picture that may be browsed by the user, the user may touch the display screen to operate by using, for example, a pen, a finger or other objects. In addition, when the display screen stops displaying a picture, the display screen looks like transparent glass, and the switchable assembly 3 may be in a transparent state, so that the user may view a scene outside the window of the vehicle through the display screen.

For example, the display screen may be a transparent OLED (Organic Light Emitting Diode) display screen. For another example, the display screen may be a transparent LCD (Liquid Crystal Display). An area of the display region of the display screen may be the same as the area of the switchable glass 10, so that the display screen may have a full-screen effect. Alternatively, the area of the display region may be less than the area of the switchable glass 10.

In an example, the display screen may include a capacitive touch screen and an infrared touch screen. Taking the infrared touch screen as an example, an infrared detection network may be formed on a surface of the display screen, and any touch object may change infrared radiation on a touch point to achieve a touch operation. The object (such as a writing pen) of touch operationmay change the infrared radiation of the touch point, which is then converted into a coordinate position of the touch to achieve a response to the operation.

In an example, in the third state, a writing function may be implemented by the user on the display screen through a touch action. First, the switchable assembly 3 may be switched to a full black or full white mode from any sub-region switching state, thereby turning on the display function, and the display screen displays a picture suitable for writing, such as a whiteboard, paper, or draft paper. Next, the user's touch trajectory is detected. Furthermore, the display screen may include a dot matrix LED. After an LED point corresponding to the touch trajectory is detected, a corresponding handwriting color may light up at that LED point, and finally the characters written by the user are formed.

According to embodiments of the present disclosure, on the basis of dynamically switching sub-regions, it is possible to further achieve the display function and/or writing function, which may be applied to a wider range of application scenarios and meet diverse desires.

FIG. 12 shows a curve of an variation of a light transmittance of a switchable glass 10 with a driving voltage according to some embodiments of the present disclosure.

Referring to FIG. 12, a VT (driving voltage-transmittance, Voltage-Trans) curve of VA-type PI liquid shows that the light transmittance gradually increases as the driving voltage increases. A VT curve of TN-type PI liquid shows that the light transmittance gradually decreases as the driving voltage increases. PI liquid includes polyimide, which is mainly used to make an alignment layer of the liquid crystal display screen, so that the liquid crystal molecules are arranged in a regular direction under the action of the electric field. VA type refers to Vertical Alignment type, and TN type refers to Twisted Nematic type.

In an example, by applying an electrical signal to the first electrode 12 and the second electrode 22, it is possible to generate an electric field between the first electrode 12 and the second electrode 22. As the applied driving voltage varies, the light transmittance may change accordingly. Furthermore, referring to FIG.11A to FIG. 11H, by separately applying a driving voltage to each sub-electrode, it is possible to switch the state of the switchable glass 10.

In other embodiments, in addition to controlling the magnitude of the driving voltage as shown in FIG. 12, it is also possible to change a frequency of the driving voltage to further achieve a fine adjustment of the light transmittance.

In the related art, an adhesive optical film may be attached to the window glass of the vehicle to achieve a fixed shading region and a fixed transmittance of the window of the vehicle. Taking a side windshield glass on a driver side of the vehicle as an example, from the perspective of a driver seat, an angle of the rearview mirror needs to be adjusted for drivers of different heights. However, a transparent portion of the side window film is fixed and may not be adjusted, so that the rearview mirror is partially in the transparent region and partially in the shading region, resulting in a split picture on the rearview mirror and causing visual conflicts, especially posing driving safety hazards at turns and at a boundary between light and dark. Moreover, passengers of different genders and ages have different desires for shading. Female passengers or drivers may consider sun protection and require less light to pass through, while male passengers or drivers prefer more sunlight. Therefore, a vehicle may not simultaneously meet the desires of passengers or drivers of different genders, body types or preferences.

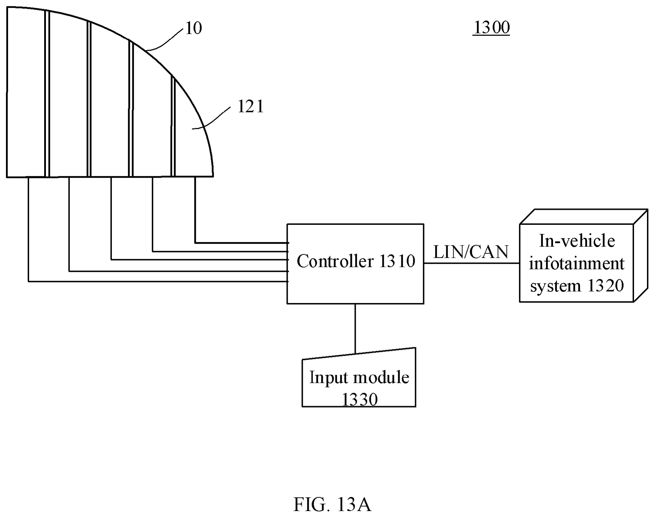

FIG. 13A to FIG. 13C show schematic structural diagrams of a switchable glass system 1300 for a vehicle according to different exemplary embodiments of the present disclosure.

In some embodiments of the present disclosure, the switchable glass system 1300 for a vehicle is provided. The system includes a switchable glass 10 and a controller 1310. The switchable glass 10 may be implemented based on one or more embodiments of FIG. 1 to FIG. 11H above and installed on a vehicle, and the controller 1310 is electrically connected to the first electrode 12 and the second electrode 22 of the switchable glass 10.

The switchable glass system 1300 provided according to embodiments of the present disclosure may achieve a function of dynamically adjusting the shading region of the window of the vehicle, thereby meeting different desires of different passengers/drivers.

As shown in FIG. 13A to FIG. 13C, the switchable glass system 1300 may include the switchable glass 10 and the controller 1310. The controller 1310, an in-vehicle infotainment system 1320 and an input module 1330 may be electrically connected to each other.

For example, the input module 1330 may include an input device integrated in the vehicle, such as a voice input device, a keyboard input device, or a mouse input device. In addition, the input module 1330 may further include a terminal device used by the user, such as a smart phone, a tablet computer, a wearable smart bracelet, a wearable smart headset, a virtual reality device or an augmented reality device, etc. The terminal device may establish a communicative connection with the controller 1310 and/or the in-vehicle infotainment system 1320 using a network protocol or a Bluetooth protocol to obtain user input information.

Referring to FIG. 13A, the first electrode 12 of the switchable glass 10 in such embodiments includes first sub-electrodes 121, which support one or more sub-regions in a vertical direction on the paper, and an area of each sub-region and the number of sub-regions are adjustable. An adjustable level is determined by the number of first sub-electrodes 121, such as at least two separately controllable first sub-electrodes 121. The greater the number of the first sub-electrodes 121, the more delicate the control of the dynamic switching for sub-regions. In addition, the light transmittance of each sub-region may be fixed, or a level adjustment or stepless adjustment may be supported.

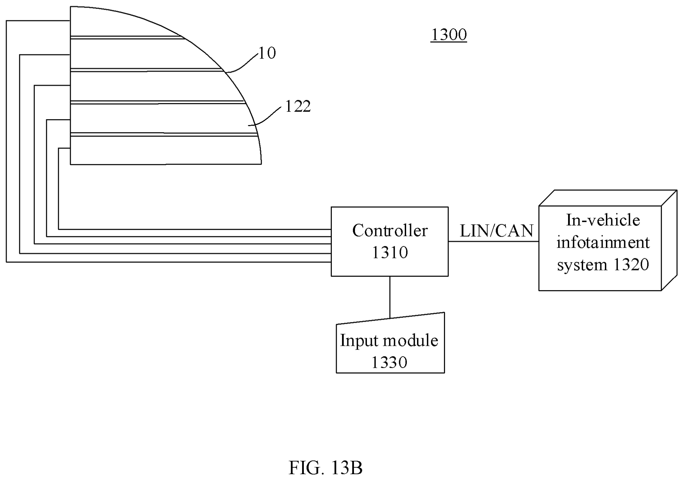

Referring to FIG. 13B, the first electrode 12 in the switchable glass 10 in such embodiments includes second sub-electrodes 122, which support one or more sub-regions in a horizontal direction on the paper, and an area of each sub-region and the number of sub-regions are adjustable. An adjustable level is determined by the number of second sub-electrodes 122, such as at least two separately controllable second sub-electrodes 122. The greater the number of the second sub-electrodes 122, the more delicate the control of the dynamic switching for sub-regions. In addition, the light transmittance of each sub-region may be fixed, or a level adjustment or stepless adjustment may be supported.

Referring to FIG. 13C, the first electrode 12 in the switchable glass 10 in such embodiments includes third sub-electrodes 123, which support one or more sub-regions in a horizontal direction, a vertical direction or an array on the paper, and an area of each sub-region and the number of sub-regions are adjustable. An adjustable level is determined by the number of third sub-electrodes 123, such as at least two separately controllable third sub-electrodes 123. The greater the number of the third sub-electrodes 123, the more delicate the control of the dynamic switching for sub-regions. In addition, the light transmittance of each sub-region may be fixed, or a level adjustment or stepless adjustment may be supported.

In some embodiments, one or more switchable glasses 10 as shown in FIG. 13A to FIG.13C may be used on one or more glasses of the vehicle. For example, it is possible to use any one of the switchable glasses 10 described with reference to FIG. 13A to FIG. 13C, or simultaneously use at least two of the switchable glasses 10 described with reference to FIG. 13A to FIG. 13C.

In some embodiments, on one or more glasses of a vehicle, instead of using only one of the first sub-electrode 121, the second sub-electrode 122 or the third sub-electrode 123 in each switchable glass 10 as shown in FIG. 13A to FIG. 13C, at least two of the first sub-electrode 121, the second sub-electrode 122 and the third sub-electrode 123 may be used in combination in the switchable glass 10.

Taking the side windshield glass near the driver (such as the left front side window, determined according to the driving position) as an example, based on the dynamic switching of at least one attribute of the sub-region achieved by the state change of the switchable glass 10, various embodiments applied to a vehicle to achieve dynamic switching functions such as shading range, shading degree and shading method will be further decribed.

FIG. 14A to FIG. 14F show schematic diagrams of dynamic switching of vertical sub-regions according to some exemplary embodiments of the present disclosure, in which sub-region I of the left front window includes a rearview mirror region 1401. A direction from the rearview mirror region 1401 to the left is set as from front to back in a length direction of the vehicle, and a direction from the rearview mirror region 1401 to the top is set as from bottom to top in a height direction of the vehicle.

The light transmittance of sub-region I and the light transmittance of sub-region II may be dynamically adjusted by the driver according to a lighting condition outside the vehicle (such as sufficient sunlight at noon in summer or dim light in the evening in winter), a route to travel (such as urban streets with bright street lights or small roads without street lights), and gender, mood, height and sitting height of the driver.

As shown in FIG. 14A, the mode is adjusted from a normally white mode (completely light-transmitting state) to a mode in which sub-region I is normally white and sub-region II is normally black (a normally black mode refers to a state that meets a lowest transmittance of window film). Such shading mode is required in most normal driving situations, regardless of nights, daytime, or route travel.

As shown in FIG. 14B, according to actual desires, the mode may also be adjusted from a normally black mode to a mode in which sub-region I is normally white and sub-region II is normally black.

As shown in FIG. 14C, if the user considers that the opaque region is too dark or the transparent region is too bright, the light transmittance of each sub-region may be flexibly adjusted. For example, the 80% transmittance of sub-region I in the left figure may be adjusted to 20% transmittance in the upper right figure or 95% transmittance in the lower right figure, and the 20% transmittance of sub-region II may be adjusted to 80% transmittance in the upper right figure or 60% transmittance in the lower right figure (the above transmittance values are merely examples). It may be understood that the user is allowed to arbitrarily adjust the transmittance of at least one sub-region, and adjust at least one sub-region to have any transmittance value within an allowable range.

As shown in FIG. 14D, the user is allowed to adjust a size of the sub-region according to preferences or a travelling status (such as turning left or right). The adjustment may be performed in a manual mode (knob or touch) or an automatic mode (in which a comprehensive determination is performed according to a vehicle speed, a travelling direction, whether a turn signal is on, a position of a gaze point, etc. in conjunction with an information acquisition system).

As shown in FIG. 14E, the adjustment is not limited to two sub-regions, and it is also possible to perform a dynamic adjustment on three sub-regions (such as figure a and figure b), four sub-regions (such as figure c and figure d), or even more sub-regions.

As shown in FIG. 14F, the user is also allowed to switch the mode from the normally black mode to a mode in which sub-region I is normally black and sub-region II is normally white.

It may be understood that the user is allowed to adjust the state shown in any of FIG. 14A to FIG. 14F to the state shown in any other of FIG. 14A to FIG. 14F. However, the present disclosure is not limited to this, and the user is allowed to determine any number of sub-regions within an allowable range, and adjust the light transmittance of any sub-region.

FIG. 15A to FIG. 15C show schematic diagrams of dynamic switching of horizontal sub-regions according to some exemplary embodiments of the present disclosure.

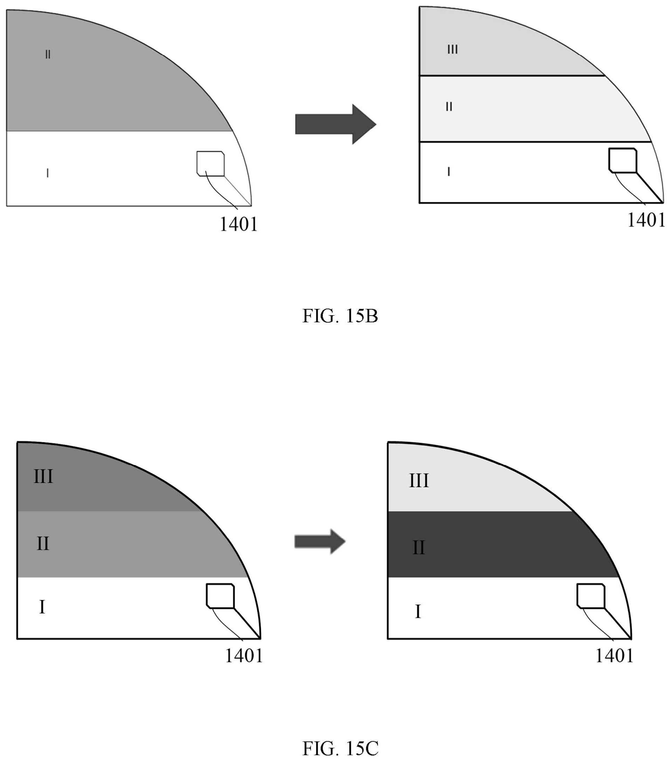

As shown in FIG. 15A, the user is allowed to adjust the normally white mode to a mode in which sub-region II is normally black and sub-region I is normally white. As shown in FIG. 15B, the user is also allowed to adjust the mode in which sub-region II is normally black and sub-region I is normally white to a mode in which three sub-regions are provided, and adjust the light transmittance of each sub-region. In an example, the user is also allowed to adjust the number of horizontal sub-regions and the light transmittance of each sub-region from the normally black mode until the requirements are met. For example, it is also possible to switch from two horizontal sub-regions to three horizontal sub-regions, switch from three horizontal sub-regions to four horizontal sub-regions, or switch from four horizontal sub-regions to five horizontal sub-regions. For another example, it is also possible to switch from a number of horizontal sub-regions directly to a different number of horizontal sub-regions within the allowable range.

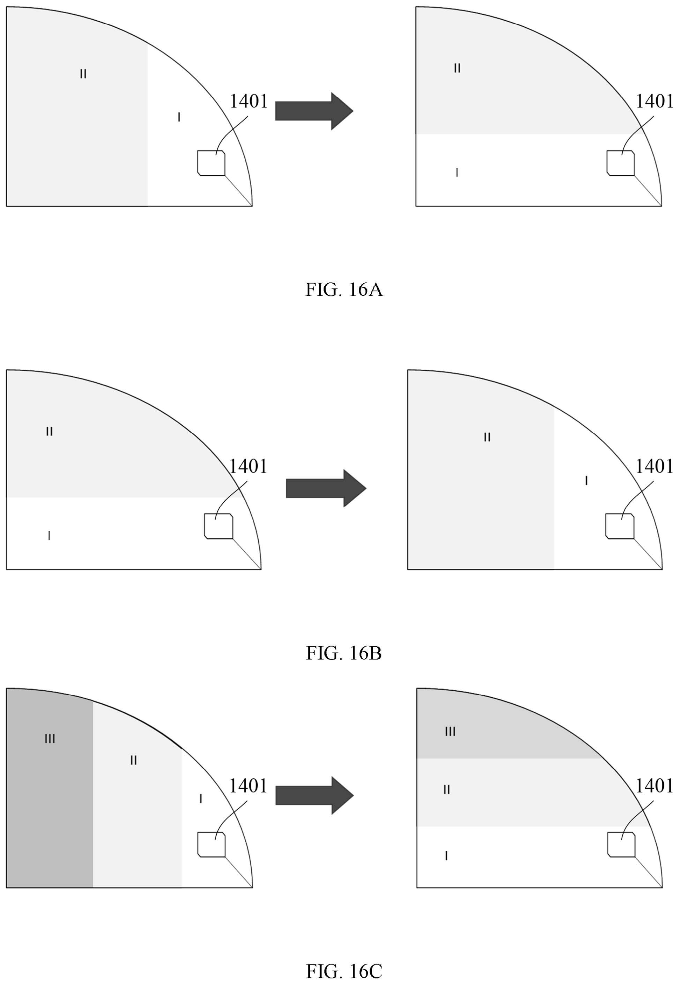

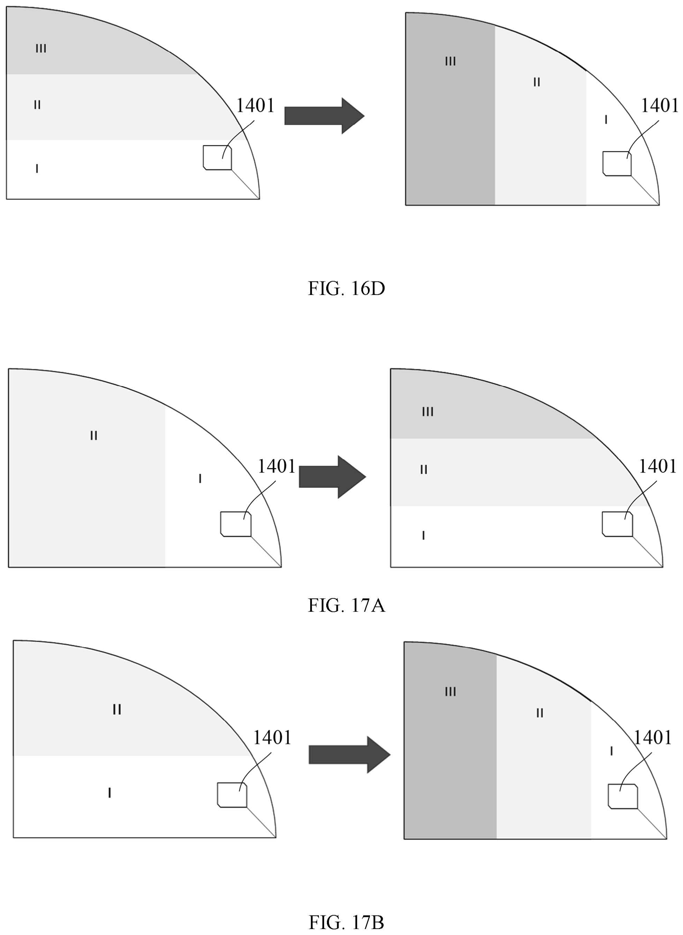

FIG. 16Ato FIG. 16D show schematic diagrams of dynamic switching between a number of horizontal sub-regions and the same number of vertical sub-regions according to some exemplary embodiments of the present disclosure.

As shown in FIG. 16A and FIG. 16B, it is possible to switch between two horizontal sub-regions and two vertical sub-regions. As shown in FIG. 16C and FIG. 16D, it is possible to switch between three horizontal sub-regions and three vertical sub-regions.

In some embodiments, referring to FIG. 16A to FIG. 16D, the serial numbers of sub-regions may be determined sequentially by using the serial number of the rearview mirror region 1401 as a reference, and it is possible to only switch the direction of the sub-region without changing the occupancy range and transmittance of each sub-region or changing the relative position between the sub-regions. In other embodiments, on the basis of switching the direction of the sub-region, it is possible to change at least one attribute of at least one sub-region, such as the occupancy range, the transmittance and relative position.

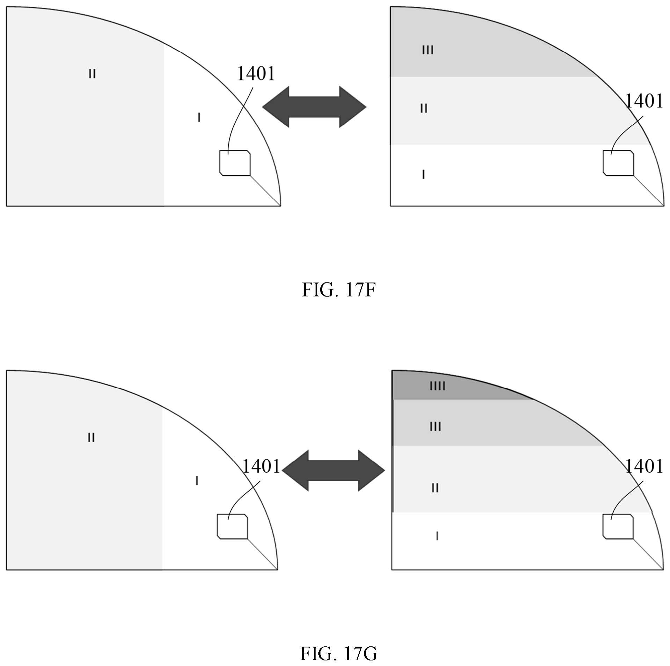

FIG. 17A to FIG. 17I show schematic diagrams of dynamic switching between a number of horizontal sub-regions and a different number of vertical sub-regions according to some exemplary embodiments of the present disclosure.

In some embodiments, as shown in FIG. 17A and FIG. 17B, it is possible to switch from a small number of sub-regions directly to a large number of sub-regions, such as dynamically switching from two vertical sub-regions to three horizontal sub-regions. The difference in quantity between the small number of sub-regions and the large number of sub-regions is less than or equal to 1.

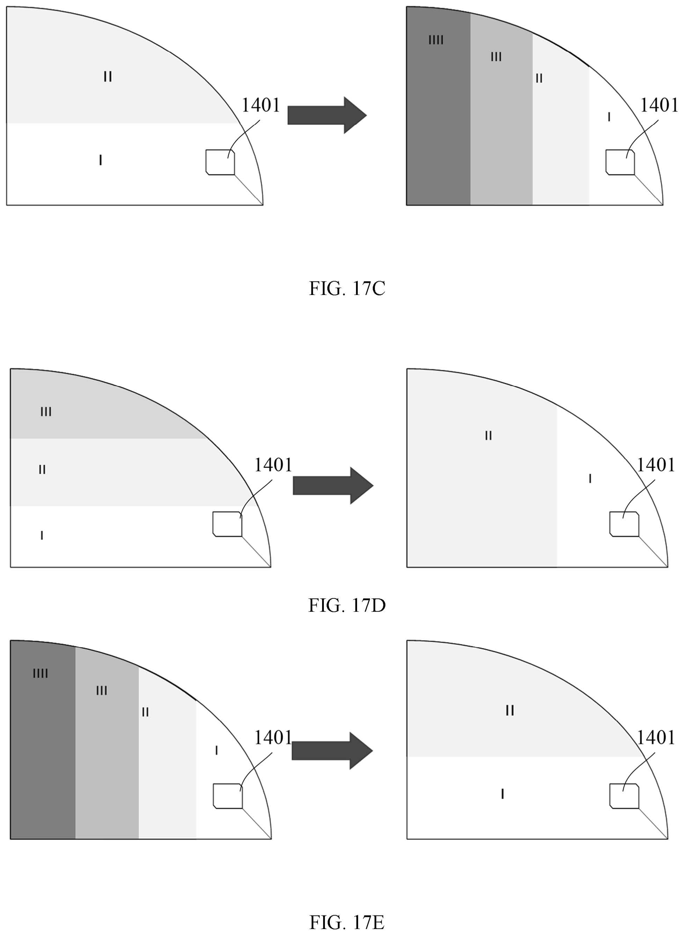

In some embodiments, as shown in FIG. 17C, it is possible to switch from a small number of sub-regions directly to a large number of sub-regions, such as dynamically switching from two horizontal sub-regions to four vertical sub-regions. The difference in quantity between the small number of sub-regions and the large number of sub-regions is any value.

In some embodiments, as shown in FIG. 17D, it is possible to switch from a large number of sub-regions directly to a small number of sub-regions, such as dynamically switching from three horizontal sub-regions to two vertical sub-regions. The difference in quantity between the large number of sub-regions and the small number of sub-regions is less than or equal to 1.

In some embodiments, as shown in FIG. 17E, it is possible to switch from a large number of sub-regions directly to a small number of sub-regions, such as dynamically switching from four vertical sub-regions to two horizontal sub-regions. The difference in quantity between the large number of sub-regions and the small number of sub-regions is any value.

In some embodiments, as shown in FIG. 17A to FIG. 17G, it is possible to directly switch between a number of horizontal sub-regions and a different number of vertical sub-regions. After the direction is switched, the attribute of each sub-region may be adjusted separately. For example, it is possible to directly switch between the horizontal sub-region mode shown in any of FIG. 17A to FIG. 17G and the vertical sub-region mode shown in any of FIG. 17A to FIG. 17G .

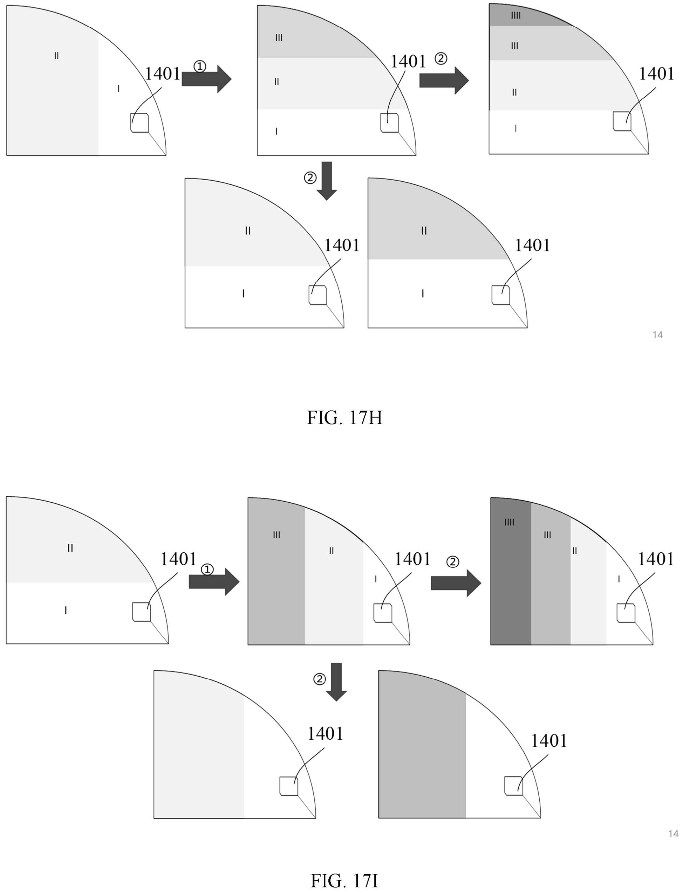

In some embodiments, as shown in FIG. 17H to FIG. 17I, in a case of switching between sub-region modes in different directions, it is only possible to switch from a small number of sub-regions in one direction to another number of sub-regions that differs by 1 in the other direction. After the direction is switched, an adjustment may be performed to increase or reduce the number of sub-regions. In an example, referring to FIG. 17H, two vertical sub-regions may be switched to three horizontal sub-regions, and three horizontal sub-regions may be switched to four horizontal sub-regions or two horizontal sub-regions, and the transmittance of each sub-region is adjusted separately. If the number of sub-regions in the horizontal direction is changed, a large number of horizontal sub-regions may not be adjusted back to vertical sub-regions. To switch from the horizontal mode to the vertical mode, it is required to adjust to a minimum number of sub-regions and then switch the minimum number of sub-regions to the same number of sub-regions in the other direction. In an example, referring to FIG. 17I, it is possible to switch two horizontal sub-regions to three vertical sub-regions, and then switch three vertical sub-regions to four vertical sub-regions or two vertical sub-regions, and the transmittance of each sub-region may be adjusted separately. It is possible to switch from n horizontal sub-regions directly to n+1 vertical sub-regions (n is greater than or equal to 1). If the number of sub-regions in the vertical direction is changed, the vertical sub-regions may not be directly adjusted back to the horizontal sub-regions. To switch from the vertical mode to the horizontal mode, it is required to adjust to a minimum number of sub-regions and then switch the minimum number of sub-regions to the same number of sub-regions in the other direction.

In some embodiments, the M sub-regions are arranged linearly in the length direction of the vehicle, or arranged linearly in the height direction of the vehicle, or arranged in an array in the length direction and the height direction of the vehicle; and/or the N sub-regions are arranged linearly in the length direction of the vehicle, or arranged linearly in the height direction of the vehicle, or arranged in an array in the length direction and the height direction of the vehicle.

Referring to FIG. 14A to FIG. 17I, the horizontal direction is the length direction of the vehicle, and the vertical direction is the height direction of the vehicle. The linear arrangement in the length direction of the vehicle corresponds to a plurality of vertical sub-regions, and the linear arrangement in the height direction of the vehicle corresponds to a plurality of horizontal sub-regions. The array arrangement in the length direction and the height direction of the vehicle may be referred to FIG. 11E and FIG. 11F.

In an example, in a case that any one of FIG. 14A to FIG. 17I in which at least two vertical sub-regions are provided shows the switchable glass 10 in the first state, the M sub-regions are arranged linearly in the length direction of the vehicle. For example, any other of FIG. 14A to FIG. 17I in which at least two vertical sub-regions are provided shows the switchable glass 10 in the second state, that is, the N sub-regions are also arranged linearly in the length direction of the vehicle. For another example, any one of FIG. 14A to FIG. 17I in which at least two horizontal sub-regions are provided shows the switchable glass 10 in the second state, that is, the N sub-regions are arranged linearly in the height direction of the vehicle. For still another example, the switchable glass 10 in the second state on the vehicle may display a similar or identical effect to that shown in any of FIG. 11E and FIG. 11F, that is, the N sub-regions may be arranged in an array in the length direction and the height direction of the vehicle. It may be understood that the above first state and second state may be interchanged, for example, the first state may serve as the second state, and the second state may serve as the first state, which will not be elaborated here.

In some embodiments, the switchable glass 10 is switched from the first state to the second state. One sub-region is provided in the first state, i.e., M=1, and at least two sub-regions are provided in the second state, i.e., N is greater than or equal to 2.

In an example, referring to the left figure of FIG. 14A and the left figure of FIG. 14F, when the switching mode is in the first state, such as the normally white mode or the normally black mode, it may be determined that one sub-region is provided. The normally white mode or the normally black mode may be switched to at least two sub-regions. Referring to FIG.14A, for example, the state is initially the first state in the left figure, and the driver is allowed to adjust the first state to the second state in the right figure due to the driver's desires for shading or privacy protection, which may not affect the viewing of the rearview mirror and may meet the driver's desires.

In some embodiments, the M sub-regions have a first light transmittance, the N sub-regions respectively have N light transmittances, at least one of the N light transmittances is the same as the first light transmittance, and at least another one of the N light transmittances is different from the first light transmittance.

Continuing to refer to FIG. 14A and FIG. 14F, the first light transmittance may be 0 or approximately 0 (normally black mode), or 100% (normally white mode). After switching, sub-region I where the rearview mirror region 1401 is located has the same light transmittance as the first light transmittance, while sub-region II has a different light transmittance from the first light transmittance, so that the environment in which the driver views the rearview mirror may not be changed, which may ensure safety and meet other desires of the driver.

In some embodiments, the switchable glass 10 is switched from the first state to the second state, where M=N, both M and N are positive integers greater than or equal to 2, and the occupancy ranges of the N sub-regions are different from the occupancy ranges of the M sub-regions, respectively.

In an example, referring to FIG. 14D, for example, the leftmost figure shows the switchable glass 10 in the first state, and the middle or rightmost figure shows the switchable glass 10 in the second state. The sub-regions with the same serial number before and after switching have different occupancy ranges, so that the shading desires of different drivers may be met and the shading range may be flexibly adjusted.

In some embodiments, the switchable glass 10 is switched from the first state to the second state, where M=N. The M sub-regions are arranged linearly in the length direction of the vehicle, and the N sub-regions are arranged linearly in the length direction of the vehicle. At least an i^{th} sub-region among the N sub-regions has a different light transmittance from at least an i^{th} sub-region among the M sub-regions, where i is a serial number sequenced from front to back in the length direction of the vehicle, and i is a positive integer greater than or equal to 1 and less than or equal to M.

In an example, referring to FIG. 14C, for example, the leftmost figure shows the switchable glass 10 in the first state, in which sub-region I has 20% transmittance and sub-region II has 80% transmittance. For example, any of the figures on the right shows the switchable glass 10 in the second state. For example, in the upper right figure, sub-region I has 80% transmittance, sub-region II has 20% transmittanc, and the sub-regions with the same serial number have different transmittance. For example, in the lower right figure, sub-region 1 has 20% transmittance, sub-region 2 has 60% transmittance, and at least the sub-region II has a different transmittance.

In some embodiments, the switchable glass 10 includes a side windshield glass 1801 on a driver side of the vehicle, and the light transmittance of a first sub-region among the N sub-regions is greater than the light transmittance of other sub-regions among the N sub-regions.

Referring to FIG. 14C, for example, the leftmost figure shows the switchable glass 10 in the first state, and the upper right figure shows the switchable glass 10 in the second state, where sub-region 1 has 80% transmittance, which is greater than 20% transmittance of sub-region 2. The display principle of the side windshield glass 1801 is as follows: by changing the driving voltage, the dye is changed through the rotation of the liquid crystal, thereby achieving the switching between bright and dark. For example, the transmittance requirements of the side windshield glass 1801 vary depending on different application scenarios. Generally, the transmittance of a track or skylight is required to be less than 10% in the dark state and as bright as possible in the bright state (with a wide range of brightness changes). The transmittance of a passenger car is require to be less than 1% in the dark state and as bright as possible in the bright state.

In some embodiments, the light transmittance and/or occupancy range of at least one of the N sub-regions is determined based on at least one of a user input information, an information outside the vehicle, an information inside the vehicle, or a travelling information of the vehicle.

In an example, the user input information includes a peripheral input information, a voice information, a gesture information, a posture information, and an eye movement information, etc. For example, the peripheral input information includes information input by the user through devices such as button, knob, keyboard, mouse, or handle. The voice information includes information input by the user through voice command or conversation. The gesture information may include gestures such as sliding, clicking, and pinching made by the user on the touch screen of the in-vehicle infotainment system or the switchable glass, and may further include a hand movement trajectory or gesture detected by a camera. The posture information includes information such as a movement trajectory and posture of the user's torso or limbs detected by the camera. The eye movement information includes information such as the user's eye movement, gaze point, gaze direction, and gaze time. Accordingly, corresponding hardware and software modules may be provided for users to input information, such as a peripheral module, a voice recognition module, a gesture recognition module, a posture recognition module, an eye movement recognition module, and the like.

In an example, the information outside vehicle may include environmental information around the vehicle, information about other vehicles, or interactive information of other vehicles with the current vehicle. The environmental information around the vehicle includes road type, road markings, traffic light information, road conditions on the current road, road conditions on the planned route, current ambient illumination (such as natural illumination based on time, weather, sunlight, etc., or artificial illumination based on street lamps) or scenery information (such as a determination on whether the scenery is suitable through maps, online reviews or cameras outside the vehicle), etc. The information about other vehicles includes a position, speed or acceleration information of surrounding vehicles. The interactive information of other vehicles with the current vehicle includes the honking information of other vehicles (whether it is interactive information may be determined according to the position of the honking vehicle), an interactive information sent to the current vehicle through a smart device such as a mobile phone, or lighting information of other vehicles, etc.

In an example, the information inside the vehicle may include a user body signal information, a driver driving status, a passenger position information, a number of people in the vehicle, a passenger body shape information, an in-vehicle conversation information, an in-vehicle brightness information, an in-vehicle temperature information, or an in-vehicle theme information (for example, the vehicle interior may display multiple themes and be dynamically changeable), etc. For example, the body signal information includes detected information such as user's brain waves, electrocardiogram, heartbeat or body temperature. The driver's driving status includes the driver's pupil size, whether the driving is talking, the direction of head rotation and the degree of fatigue. The passenger position information includes current positions of one or more passengers, so as to determine nearby switchable glass in targeted manner. The number of people in the vehicle includes the number of passengers. The in-vehicle conversation information includes a conversation volume, a speaking frequency or conversation content (acquired after obtaining user authorization) of the users in the vehicle. The in-vehicle theme information includes attributes such as style, color, content or source work of the images displayed on the vehicle interior.

In an example, the travelling information of the vehicle includes a vehicle speed, a vehicle steering information, and a vehicle travelling direction, etc.

It may be understood that at least one of the user input information, the information outside the vehicle, the information inside the vehicle or the travelling information of the vehicle may be acquired through a device of the vehicle, or may be acquired through communication with other vehicles, smart devices or cloud servers through network protocols.

By means of acquiring at least one of the user input information, the information outside the vehicle, the information inside the vehicle or the travelling information of the vehicle, the light transmittance and/or occupancy range of at least one of the N sub-regions may be determined by a user adjustment, a selected adjustment or an automatic adjustment.

For example, in a case of user adjustment, the light transmittance and/or occupancy range of at least one of the N sub-regions may be determined based on the user input information. For example, the user is allowed to adjust the transmittance of external light of at least one sub-region through a mechanical knob in the input module 1330. The mechanical knob may provide adjustment options including adjustment levels (such as 2 to 10 levels), transmittance change intervals (such as transmittance of 10%, 15%, 20%, 60%, 80%) and occupancy range intervals. The user is also allowed to perform adjustment by touch, for example, directly sliding on the corresponding sub-region on the switchable glass 10 to adjust the transmittance. For another example, the user is allowed to directly press or select a border of the corresponding sub-region, and adjust a border size of the sub-region by dragging, so as to adjust the occupancy range. The user is also allowed to wake up an intelligent robot in the vehicle and control the light transmittance and/or occupancy range of at least one sub-region through voice. For another example, the in-vehicle infotainment system 1320 may pre-store a plurality of modes of at least one switchable glass 10 in the vehicle, each mode includes specific attributes of N sub-regions, and the user input information may include adjusting to a particular mode. For another example, each switchable glass in the vehicle is equipped with a camera to acquire the eye movement information of the user, and the user may consciously stare at a particular switchable glass for more than a predetermined number of seconds, thereby achieving the purpose of adjusting the transmittance and/or occupancy range. For another example, the user may make a specific posture to adjust the transmittance and/or the occupancy range.

For example, in the automatic adjustment mode, the light transmittance and/or occupancy range of at least one of the N sub-regions may be determined based on at least one of the information outside the vehicle, the information inside the vehicle, or the travelling information of the vehicle. For example, it is possible to monitor the ambient brightness in real time in a travelling process of the vehicle. Taking the driver position as an example, it is possible to monitor a local ambient brightness of the position, and dynamically adjust the light transmittance and/or occupancy range of at least one of the N sub-regions according to the changes in the ambient brightness. Furthermore, for example, if the sunlight is too strong, it is possible to acquire a body shape of the driver through the camera inside the vehicle, then reasonably determine the position of one or more sub-regions according to the body shape, and adjust the light transmittance and/or occupancy range accordingly to avoid discomfort to the driver when the light is too strong and not affect the driver's observation of the rearview mirror. In some embodiments, a temperature sensor may be integrated inside the switchable glass 10 and placed in the same environment as the liquid crystal layer 31. The temperature sensor may detect a temperature of the liquid crystal layer 31 in real time and adjust the electrical signal in real time according to the temperature.

When the information about other vehicles is detected, for example, when it is detected that a vehicle behind is speeding, or a vehicle behind on the side is signaling to cut in, etc., the switchable glass on the driver side may be adjusted in time to adjust the light transmittance and/or occupancy range of at least one sub-region. When an interaction information of other vehicles with the current vehicle is detected, for example, when it is detected that other vehicles are honking behind the current vehicle, a vehicle ahead on the side is turning on the turn signal, someone is speaking to the current vehicle (such as when the vehicle is stationary or travelling slowly), or other vehicles belong to the same family or unit as the current vehicle, the light transmittance may be increased or decreased accordingly, or the occupancy range of at least one sub-region may be expanded or reduced. When it is determined according to a map, destination information or real-time camera that the vehicle is traveling on a road with suitable scenery, the light transmittance may be automatically increased or the occupancy range of at least one sub-region may be expanded for the users in the vehicle to enjoy scenery.

For example, it is possible to detect the body signal information of the driver regularly and determine the driving status of the driver, and then increase the light transmittance or expand the occupancy range of at least one sub-region accordingly, so that the driver may drive more comfortably and safely. It may be determined whether to require a private environment or to avoid a too dark environment in the vehicle according to the in-vehicle conversation information, and make a corresponding adjustment. For example, it is possible to determine user desires according to user posture information, in-vehicle conversation information, and in-vehicle brightness information. For example, if a passenger needs to read a paper book, the light transmittance may be automatically increased or the occupancy range of at least one sub-region may be expanded to improve a natural reading environment. For example, it is possible to determine the current in-vehicle theme information, in-vehicle brightness information, current ambient illumination and scenery information, and adjust the light transmittance and/or occupancy range of at least one sub-region accordingly, thereby achieving an integration of theme content, scenery content, user-perceived brightness or comfort.

In some embodiments, a hybrid adjustment mode of automatic adjustment and user autonomous adjustment may be implemented. For example, the light transmittance and/or occupancy range of at least one of the N sub-regions may be determined based on the user input information and the travelling information of the vehicle. For example, when the user input information includes specific light transmittance and/or occupancy range parameters, the in-vehicle infotainment system 1320 may acquire the travelling information of the vehicle, evaluate whether the user input information is suitable for current travelling conditions, and feed the evaluation results and suggestions back to the user. For another example, the user input information may include natural language indicating subjective feelings, such as "It's too dark inside the vehicle, make it brighter", "The sunlight is too bright, make an adjustment". The in-vehicle infotainment system 1320 may further acquire the travelling information of the vehicle. If the brightness on a side of the vehicle is reduced, the light transmittance and/or occupancy range of at least one sub-region on that side may be adjusted.

In some embodiments, a selection of adjustment modes may be provided to the user, and the user is allowed to determine the light transmittance and/or occupancy range of at least one of the N sub-regions based on the automatic adjustment, the user adjustment, or a hybrid adjustment mode.

According to embodiments of the present disclosure, it is possible to interact with the user or the outside world in a timely manner, and to adjust the attribute of at least one of the N sub-regions of the switchable glass 10 to meet diverse desires.

In some embodiments, the switchable glass 10 is switched from the first state to the second state. The M sub-regions are arranged linearly in the height direction of the vehicle, the N sub-regions are arranged linearly in the height direction of the vehicle, where M=N. At least a j^{th} sub-region among the N sub-regions has a different light transmittance from at least a j^{th} sub-region among the M sub-regions, where j is a serial number sequenced from bottom to top in the height direction of the vehicle, and j is a positive integer greater than or equal to 1 and less than or equal to M. Referring to FIG. 15C, for example, the left figure shows the switchable glass 10 in the first state, and the right figure shows the switchable glass 10 in the second state, in which only the light transmittance of the sub-region II and the light transmittance of the sub-region III change.

In some embodiments, the switchable glass 10 is switched from the first state to the second state. The M sub-regions are arranged linearly in the length direction of the vehicle, and the N sub-regions are arranged linearly in the height direction of the vehicle, where M=N. In an example, referring to FIG. 16C, for example, the left figure shows the switchable glass 10 in the first state, in which three sub-regions are arranged linearly in the length direction of the vehicle, and the right figure shows the switchable glass 10 in the second state, in which three sub-regions are arranged linearly in the height direction of the vehicle.

In some embodiments, a j^{th} sub-region among the N sub-regions has the same light transmittance as at least an i^{th} sub-region among the M sub-regions, where i=j, i is a serial number sequenced from front to back in the length direction of the vehicle, i is a positive integer greater than or equal to 1 and less than or equal to M, j is a serial number sequenced from bottom to top in the height direction of the vehicle, and j is a positive integer greater than or equal to 1 and less than or equal to N. Referring to FIG. 16C, in a case that the left figure shows the switchable glass 10 in the first state and the right figure shows the switchable glass 10 in the second state, at least the sub-region I in the first state has the same light transmittance as the sub-region I in the second state.

In some embodiments, the switchable glass 10 is switched from the first state to the second state. The M sub-regions are arranged linearly in the height direction of the vehicle, and the N sub-regions are arranged linearly in the length direction of the vehicle, where M=N. In an example, referring to FIG. 16D, for example, the left figure shows the switchable glass 10 in the first state, in which three sub-regions are arranged linearly in the height direction of the vehicle, and the right figure shows the switchable glass 10 in the second state, in which three sub-regions are arranged linearly in the length direction of the vehicle.

In some embodiments, an i^{th} sub-region among the N sub-regions has the same light transmittance as at least a j^{th} sub-region among the M sub-regions, where i=j, i is a serial number sequenced from front to back in the length direction of the vehicle, i is a positive integer greater than or equal to 1 and less than or equal to N, j is a serial number sequenced from bottom to top in the height direction of the vehicle, and j is a positive integer greater than or equal to 1 and less than or equal to M. Referring to FIG. 16D, in a case where the left figure shows the switchable glass 10 in the first state and the right figure shows the switchable glass 10 in the second state, at least the sub-region I in the first state has the same light transmittance as the sub-region I in the second state.

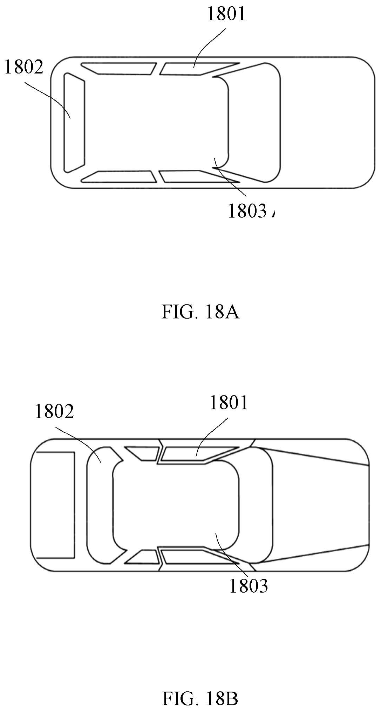

FIG. 18A to FIG. 18D show schematic diagrams of vehicles with different models according to some exemplary embodiments of the present disclosure.

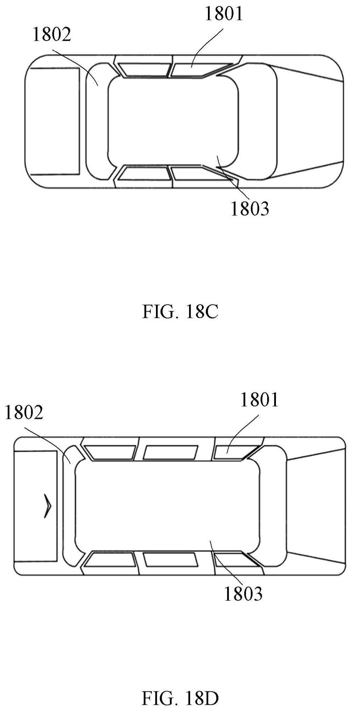

FIG. 18A shows a vehicle with a first model, FIG. 18B shows a vehicle with a second model, FIG. 18C shows a vehicle with a third model, and FIG. 18D shows a vehicle with a fourth model. In some embodiments, for example, FIG. 18A to FIG. 18D respectively show a small car, a mid-size car, a large car, and a luxury car.

In some embodiments, the switchable glass 10 includes at least one selected from a group consisting of a rear windshield glass 1802 on a rear side of the vehicle, at least one side windshield glass 1801 on a side of the vehicle, and a sunroof glass 1803 on a top side of the vehicle. For example, the switchable glass 10 may be placed in at least one of the above-mentioned positions according to specific desires of the driver or passengers in the vehicle, so as to achieve a dynamic shading effect.

In some embodiments, the switchable glasses 10 include at least two selected from the group consisting of a rear windshield glass 1802 on a rear side of the vehicle, at least one side windshield glass 1801 on a side of the vehicle, and a sunroof glass 1803 on a top side of the vehicle. The at least two switchable glasses 10 may be controlled separately. In an example, controlling at least two switchable glasses 10 separately may achieve various combined shading effects to meet personalized desires. Furthermore, the states of the switchable glasses 10 may be switched in batches to improve operational convenience.

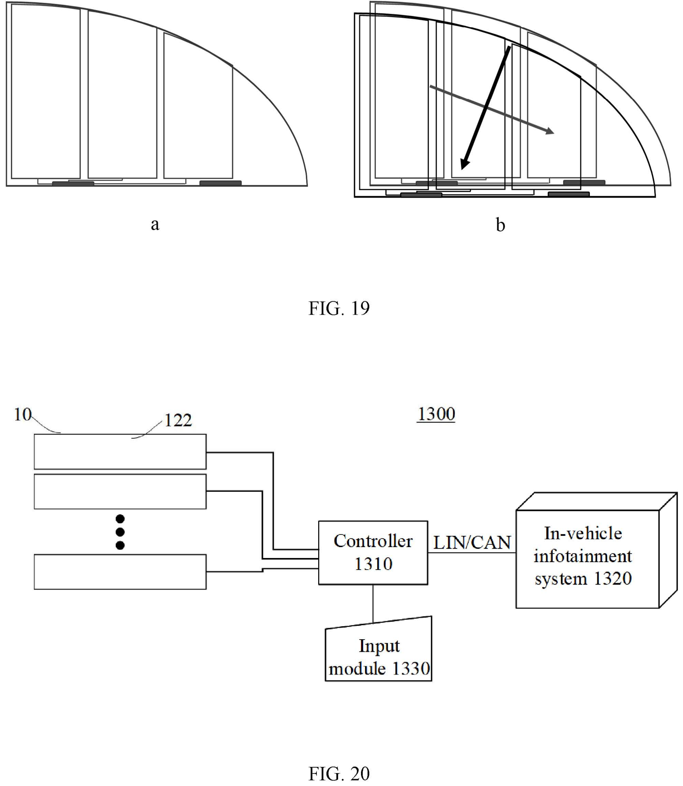

FIG. 19 shows a schematic structural diagram of a switchable glass 10 according to some exemplary embodiments of the present disclosure.

The switchable glass 10 shown in FIG. 19a is a single cell structure 1801, including a single first base substrate 11, a single second base substrate 21, a single first electrode 12, a single second electrode 22, and a single switchable assembly 3. The switchable glass 10 shown in FIG. 19b is a double-cell structure, which is formed by stacking two single-cell structures, where Rubbing directions of the two cells are perpendicular to each other, for example, the double-cell structure is formed by the following operations: coating four sheets of glass with ITO and PI liquid respectively, adding BS (or PS) between glasses, liquid crystal celling, and stacking two single cells.

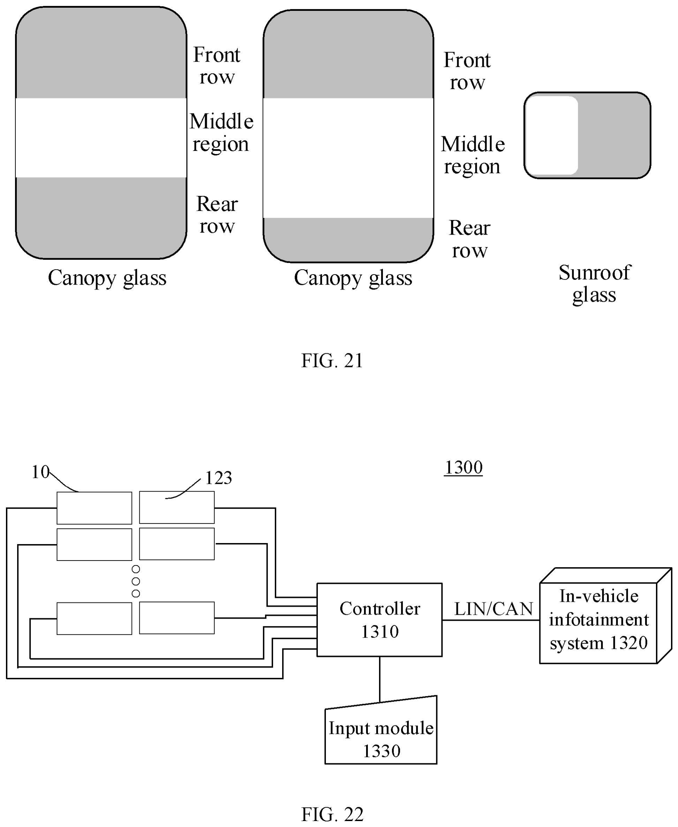

FIG. 20 shows a schematic structural diagram of a switchable glass system 1300 for a vehicle according to some further exemplary embodiments of the present disclosure. FIG. 21 shows a schematic diagram of light shielding of a sunroof glass 1803 and a canopy glass according to some exemplary embodiments of the present disclosure.

Referring to FIG. 20, the switchable glass system 1300 may include a controller 1310, an in-vehicle infotainment system 1320, an input module 1330, and a switchable glass 10. The switchable glass 10 may include a second sub-electrode 122. The switchable glass 10 in such embodiments may be used as a sunroof glass 1803 and/or canopy glass on the top side of the vehicle. As shown in FIG. 21, the canopy glass may include a front sub-region, a middle sub-region, a rear sub-region or more sub-regions, and at least one attribute, such as an occupancy range and light transmittance, of any sub-region may be adjusted. In addition, the sunroof glass 1803 may also be switched from the first state to the second state, then the M sub-regions are switched to N sub-regions accordingly, and the attribute of at least one sub-region may be changed.

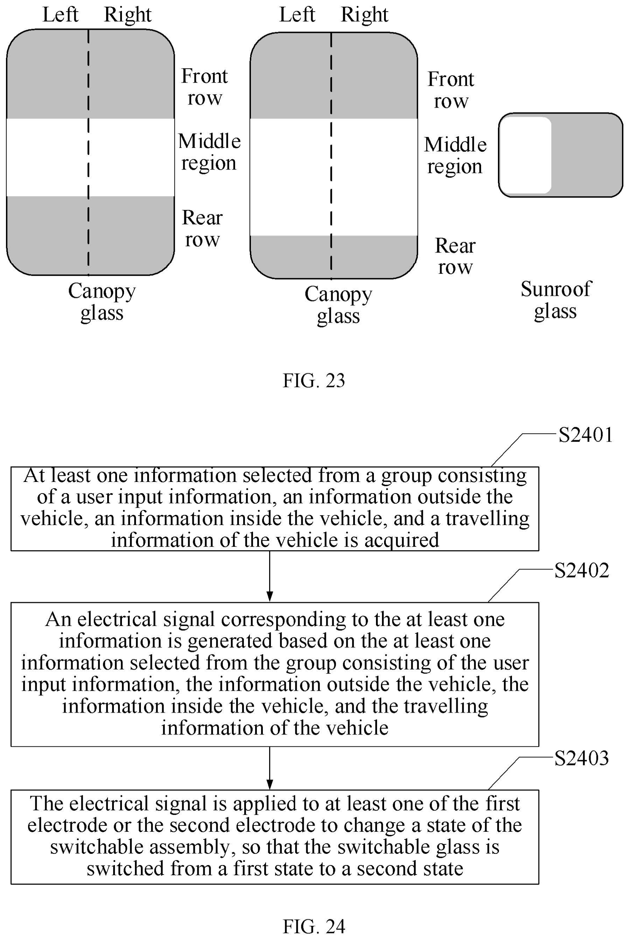

FIG. 22 shows a schematic structural diagram of a switchable glass system 1300 for a vehicle according to some further exemplary embodiments of the present disclosure. FIG. 23 shows a schematic diagram of light shielding of a sunroof glass 1803 and a canopy glass according to some further exemplary embodiments of the present disclosure.

Referring to FIG. 22, the switchable glass system 1300 may include a controller 1310, an in-vehicle infotainment system 1320, an input module 1330, and a switchable glass 10. The switchable glass 10 may include a third sub-electrode 123. The switchable glass 10 in such embodiments may be used as a sunroof glass 1803 and/or canopy glass on the top side of the vehicle. As shown in FIG. 23, the canopy glass includes the front sub-region, the middle sub-region and the rear sub-region, and a separate control may be performed on the left or right side of the canopy glass. It may be understood that by further increasing the number of third sub-electrodes 123, an array arrangement of sub-regions of the canopy glass may be achieved, which is not limited to the left and right sides, but may be further subdivided into, for example, left side, middle and right side, or more sides. Likewise, it is not limited to the front, middle and rear rows, but may be further subdivided into more regions in a front-to-rear direction of the vehicle.

FIG. 24 shows a flowchart of a method of controlling a switchable glass system according to some exemplary embodiments of the present disclosure.

As shown in FIG. 24, the control method in such embodiments may include operation S2401 to operation S2403. The switchable glass system includes: a switchable glass installed on a vehicle; and a controller. The switchable glass includes: a first base substrate and a second base substrate opposite to each other; a first electrode on the first base substrate; a second electrode on the second base substrate; and a switchable assembly sandwiched between the first base substrate and the second base substrate. The controller is electrically connected to the first electrode and the second electrode of the switchable glass.

In operation S2401, at least one information selected from a group consisting of a user input information, an information outside the vehicle, an information inside the vehicle, and a travelling information of the vehicle is acquired.

In operation S2402, an electrical signal corresponding to the at least one information is generated based on the at least one information selected from the group consisting of the user input information, the information outside the vehicle, the information inside the vehicle and the travelling information of the vehicle.

In operation S2403, the electrical signal is applied to at least one of the first electrode or the second electrode to change a state of the switchable assembly, so that the switchable glass is switched from a first state in which the switchable glass has M sub-regions to a second state in which the switchable glass has N sub-regions, where M is a positive integer greater than or equal to 1, N is a positive integer greater than or equal to 1, and the N sub-regions are different from the M sub-regions in terms of at least one attribute selected from a group consisting of a number of sub-regions, an occupancy range of at least one sub-region, a light transmittance, and a relative position.

In some embodiments, the user input information includes information input by the user through at least one operation selected from a group consisting of: operating a physical input component, operating an electronic input component, voice inputting, andr gesture controlling; and/or the travelling information of the vehicle includes at least one of a speed of the vehicle, a steering information of the vehicle, or a travelling direction of the vehicle.

For example, the physical input component includes knob, button, scroll wheel, slider or turntable, etc., and a mapping relationship between different positions, rotation angles or moving speeds of one or more physical input components and the number of sub-regions, the occupancy range, and the light transmittance is provided, so that corresponding adjustment operations may be implemented in response to a user operation on the physical input component. The electronic input component may include peripherals such as a keyboard, a mouse or a handle, and may include a touch screen of an in-vehicle infotainment system or a touchable region on the switchable glass. The voice input may be achieved through an in-vehicle sound acquisition unit, such as a main microphone or multiple microphones distributed in the vehicle, for example, which may identify which passenger is inputting the information. The voice input may also be obtained through smart devices such as mobile phones, tablet computers or smart watches, which may acquire voice information through communicative connections with the in-vehicle infotainment system. The gesture control may be achieved by collecting a user gesture touch trajectory through the touch screen of the in-vehicle infotainment system or the touchable region on the switchable glass, or by detecting a user hand movement trajectory or gesture by a camera.

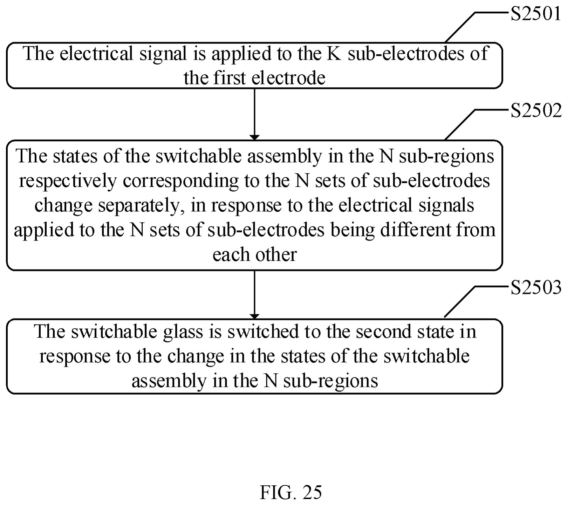

FIG. 25 shows a flowchart of applying an electrical signal according to some exemplary embodiments of the present disclosure.

As shown in FIG. 25, an embodiment of operation S2403 may include operation S2501 to operation S2503. The first electrode includes K sub-electrodes, where K is a positive integer greater than or equal to 1, and K is greater than or equal to the larger one of M and N.

In operation S2501, the electrical signal is applied to the K sub-electrodes of the first electrode. The K sub-electrodes are divided into N sets of sub-electrodes, and the electrical signals applied to the N sets of sub-electrodes are different from each other.

In operation S2502, the states of the switchable assembly in the N sub-regions respectively corresponding to the N sets of sub-electrodes change separately, in response to the electrical signals applied to the N sets of sub-electrodes being different from each other.

In some embodiments, the K sub-electrodes are divided into two sets of sub-electrodes, and the electrical signals applied to the two sets of sub-electrodes are different from each other.

In operation S2503, the switchable glass is switched to the second state in response to the change in the states of the switchable assembly in the N sub-regions.

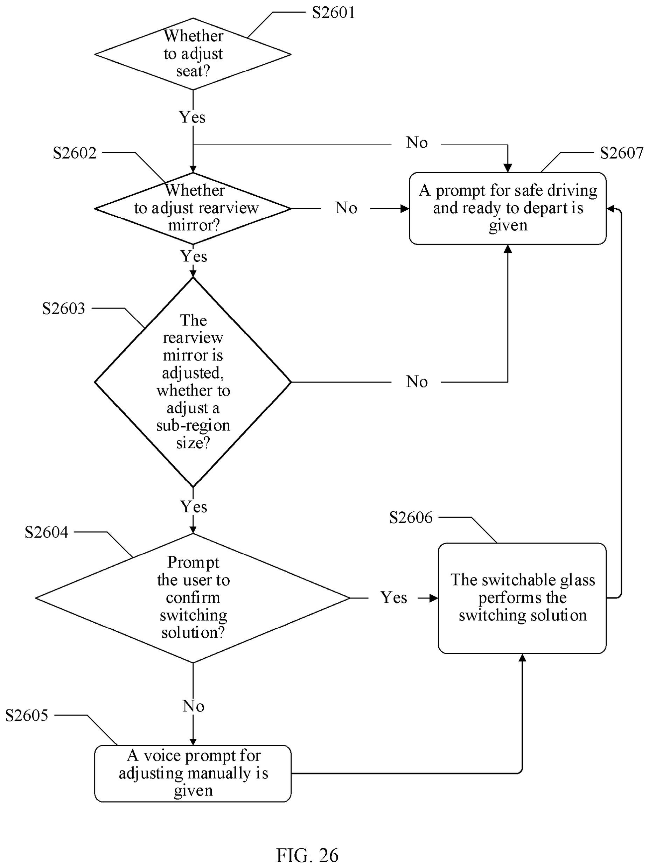

FIG. 26 shows a flowchart of adjusting a vehicle seat by a driver according to some exemplary embodiments of the present disclosure.

As shown in FIG. 26, adjusting the vehicle seat by the driver in such embodiments includes operation S2601 to operation S2607.

In operation S2601, when it is detected that the driver is seated, it is prompted whether to adjust the seat. If yes, operation S2602 is executed, or if no, operation S2607 is executed.

In operation S2602, the driver is prompted whether to adjust a rearview mirror. If yes, operation S2603 is executed; or if no, operation S2607 is executed.

In operation S2603, the rearview mirror is adjusted automatically or manually, and it is prompted whether to adjust a sub-region size of a front windshield glass. If yes, operation S2604 is executed; or if no, operation S2607 is executed.

In operation S2604, all information acquired after the driver is seated is sent to the controller, a reasonable sub-region range is output, and the user (i.e., the driver) is prompted whether to confirm a switching solution. If yes, operation S2606 is executed, or if no, operation S2605 is executed.

In operation S2605, a voice prompt for adjusting manually is given, and an input information from the driver is accepted.

In operation S2606, the switchable glass performs the switching solution, for example, to switch from a first state to a second state.

In operation S2607, a prompt for safe driving and ready to depart is given.

Some embodiments according to the general inventive concept of the present disclosure have been shown and described. However, those skilled in the art may understand that changes may be made to these embodiments without departing from the principles and spirit of the general inventive concept of the present disclosure, and the scope of the present disclosure is determined by the claims and their equivalents.

## Claims

1. A switchable glass, comprising:
a first base substrate and a second base substrate opposite to each other;
a first electrode on the first base substrate;
a second electrode on the second base substrate; and
a switchable assembly sandwiched between the first base substrate and the second base substrate,
wherein the switchable assembly is configured to change a state of the switchable assembly in response to an electrical signal applied to at least one of the first electrode or the second electrode, so that the switchable glass is switched from a first state in which the switchable glass has M sub-regions to a second state in which the switchable glass has N sub-regions, where M is a positive integer greater than or equal to 1, N is a positive integer greater than or equal to 1, and the N sub-regions are different from the M sub-regions in terms of at least one attribute selected from a group consisting of: a number of sub-regions, an occupancy range of at least one sub-region, a light transmittance, and a relative position.

2. The switchable glass according to claim 1, wherein at least one of M or N is greater than or equal to 2.

3. The switchable glass according to claim 1 or 2, wherein the M sub-regions are arranged linearly in a first direction, or arranged linearly in a second direction intersecting with the first direction, or arranged in an array in the first direction and the second direction; and/or
wherein the N sub-regions are arranged linearly in a first direction, or arranged linearly in a second direction intersecting with the first direction, or arranged in an array in the first direction and the second direction.

4. The switchable glass according to claim 3, wherein M is equal to N, and an arrangement direction of the M sub-regions is the same as an arrangement direction of the N sub-regions.

5. The switchable glass according to claim 4, wherein a light transmittance of at least an i^{th} sub-region among the M sub-regions is different from a light transmittance of at least an i^{th} sub-region among the N sub-regions, and/or an occupancy range of at least an i^{th} sub-region among the M sub-regions is different from an occupancy range of at least an i^{th} sub-region among the N sub-regions, where i is a serial number sequenced in the arrangement direction of the M sub-regions or the arrangement direction of the N sub-regions, and i is a positive integer greater than or equal to 1 and less than or equal to M or N.

6. The switchable glass according to claim 3, wherein M is equal to N, and an arrangement direction of the M sub-regions is different from an arrangement direction of the N sub-regions.

7. The switchable glass according to claim 3, wherein M is not equal to N, and an arrangement direction of the M sub-regions is the same as an arrangement direction of the N sub-regions; or
wherein M is not equal to N, and an arrangement direction of the M sub-regions is different from an arrangement direction of the N sub-regions.

8. The switchable glass according to claim 1 or 2, wherein the switchable assembly comprises a dye liquid crystal layer.

9. The switchable glass according to claim 1 or 2, wherein the first electrode comprises K sub-electrodes, K is a positive integer greater than or equal to 1, and K is greater than or equal to a larger one of M and N.

10. The switchable glass according to claim 1, wherein the switchable assembly is configured to change the state of the switchable assembly in response to electrical signals applied to the first electrode and the second electrode, so that the switchable glass is switched to a third state in which the switchable glass has at least one of a display function or a writing function.

11. A switchable glass system for a vehicle, comprising:
the switchable glass according to any one of claims 1 to 10, wherein the switchable glass is installed on the vehicle; and
a controller electrically connected to the first electrode and the second electrode of the switchable glass.

12. The switchable glass system according to claim 11, wherein the M sub-regions are arranged linearly in a length direction of the vehicle, or arranged linearly in a height direction of the vehicle, or arranged in an array in a length direction of the vehicle and a height direction of the vehicle; and/or
wherein the N sub-regions are arranged linearly in a length direction of the vehicle, or arranged linearly in a height direction of the vehicle, or arranged in an array in a length direction of the vehicle and a height direction of the vehicle.

13. The switchable glass system according to claim 11 or 12, wherein M=1, and N is greater than or equal to 2.

14. The switchable glass system according to claim 13, wherein the M sub-regions have a first light transmittance, the N sub-regions respectively have N light transmittances, at least one of the N light transmittances is the same as the first light transmittance, and at least another one of the N light transmittances is different from the first light transmittance.

15. The switchable glass system according to claim 11 or 12, wherein M=N, and M and N are positive integers greater than or equal to 2, and
wherein occupancy ranges of the N sub-regions are different from occupancy ranges of the M sub-regions, respectively.

16. The switchable glass system according to claim 11 or 12, wherein M=N, and
wherein the M sub-regions are arranged linearly in a length direction of the vehicle, the N sub-regions are arranged linearly in the length direction of the vehicle, a light transmittance of at least an i^{th} sub-region among the N sub-regions is different from a light transmittance of at least an i^{th} sub-region among the M sub-regions, where i is a serial number sequenced from front to back in the length direction of the vehicle, and i is a positive integer greater than or equal to 1 and less than or equal to M.

17. The switchable glass system according to claim 16, wherein the switchable glass comprises a side windshield glass on a driver side of the vehicle, and a first sub-region among the N sub-regions has a greater light transmittance than any other sub-region among the N sub-regions.

18. The switchable glass system according to claim 11 or 12, wherein the light transmittance and/or the occupancy range of at least one sub-region among the N sub-regions are/is determined based on at least one of a user input information, an information outside the vehicle, an information inside the vehicle, or a travelling information of the vehicle.

19. The switchable glass system according to claim 11 or 12, wherein M=N, and
wherein the M sub-regions are arranged linearly in a height direction of the vehicle, the N sub-regions are arranged linearly in the height direction of the vehicle, and a light transmittance of at least a j^{th} sub-region among the N sub-regions is different from a light transmittance of at least a j^{th} sub-region among the M sub-regions, where j is a serial number sequenced from bottom to top in the height direction of the vehicle, and j is a positive integer greater than or equal to 1 and less than or equal to M.

20. The switchable glass system according to claim 11 or 12, wherein M=N, and
wherein the M sub-regions are arranged linearly in a length direction of the vehicle, and the N sub-regions are arranged linearly in a height direction of the vehicle.

21. The switchable glass system according to claim 20, wherein a light transmittance of a j^{th} sub-region among the N sub-regions is the same as a light transmittance of at least an i^{th} sub-region among the M sub-regions, where i=j, i is a serial number sequenced from front to back in the length direction of the vehicle, i is a positive integer greater than or equal to 1 and less than or equal to M, j is a serial number sequenced from bottom to top in the height direction of the vehicle, and j is a positive integer greater than or equal to 1 and less than or equal to N.

22. The switchable glass system according to claim 11 or 12, wherein M=N, and
wherein the M sub-regions are arranged linearly in a height direction of the vehicle, and the N sub-regions are arranged linearly in a length direction of the vehicle.

23. The switchable glass system according to claim 21, wherein a light transmittance of an i^{th} sub-region among the N sub-regions is the same as at least a j^{th} sub-region among the M sub-regions, where i=j, i is a serial number sequenced from front to back in the length direction of the vehicle, i is a positive integer greater than or equal to 1 and less than or equal to N, j is a serial number sequenced from bottom to top in the height direction of the vehicle, and j is a positive integer greater than or equal to 1 and less than or equal to M.

24. The switchable glass system according to claim 11 or 12, wherein the switchable glass comprises at least one selected from a group consisting of a rear windshield glass on a rear side of the vehicle, at least one side windshield glass on a side of the vehicle, and a sunroof glass on a top side of the vehicle.

25. The switchable glass system according to claim 11 or 12, wherein at least two switchable glasses comprise at least two selected from a group consisting of a rear windshield glass on a rear side of the vehicle, at least one side windshield glass on a side of the vehicle, and a sunroof glass on a top side of the vehicle, and the at least two switchable glasses are controllable separately.

26. A method of controlling a switchable glass system, wherein the switchable glass system comprises: a switchable glass installed on a vehicle; and a controller, and wherein the switchable glass comprises: a first base substrate and a second base substrate opposite to each other; a first electrode on the first base substrate; a second electrode on the second base substrate; and a switchable assembly sandwiched between the first base substrate and the second base substrate, and the controller is electrically connected to the first electrode and the second electrode of the switchable glass,
the method comprising:
acquiring at least one information selected from a group consisting of a user input information, an information outside the vehicle, an information inside the vehicle, and a travelling information of the vehicle;
generating an electrical signal corresponding to the at least one information based on the at least one information selected from the group consisting of the user input information, the information outside the vehicle, the information inside the vehicle, and the travelling information of the vehicle; and
applying the electrical signal to at least one of the first electrode or the second electrode to change a state of the switchable assembly, so that the switchable glass is switched from a first state in which the switchable glass has M sub-regions to a second state in which the switchable glass has N sub-regions, where M is a positive integer greater than or equal to 1, N is a positive integer greater than or equal to 1, and the N sub-regions are different from the M sub-regions in terms of at least one attribute selected from a group consisting of a number of sub-regions, an occupancy range of at least one sub-region, a light transmittance, and a relative position.

27. The method according to claim 26, wherein the first electrode comprises K sub-electrodes, K is a positive integer greater than or equal to 1, K is greater than or equal to a larger one of M and N, and the applying the electrical signal to at least one of the first electrode or the second electrode to change a state of the switchable assembly so that the switchable glass is switched from a first state to a second state specifically comprises:
applying the electrical signal to the K sub-electrodes of the first electrode, wherein the K sub-electrodes are divided into N sets of sub-electrodes, and electrical signals applied to the N sets of sub-electrodes are different from each other;
separately changing states of the switchable assembly in the N sub-regions respectively corresponding to the N sets of sub-electrodes , in response to the electrical signals applied to the N sets of sub-electrodes being different from each other; and
switching the switchable glass to the second state in response to a change in the states of the switchable assembly in the N sub-regions.

28. The method according to claim 27, wherein the K sub-electrodes are divided into two sets of sub-electrodes, and electrical signals applied to the two sets of sub-electrodes are different from each other.

29. The method according to claim 26, wherein the user input information comprises an information input by a user through at least one operation selected from a group consisting of operating a physical input component, operating an electronic input component, voice inputting, and gesture controlling; and/or
wherein the travelling information of the vehicle comprises at least one of a speed of the vehicle, a steering information of the vehicle, or a travelling direction of the vehicle.
